# EUROPEAN PATENT APPLICATION

(11) **EP 2 560 290 A2**
(43) Date of publication of application: **20.02.2013**
(21) Application number: 12192563.0
(22) Date of filing: 11.06.2010
(51) Int. Cl.: H04B 1/707, H04W 48/12

(54) **Multi-Frequency Pilot Signals**

(30) Priority: 11.06.2009 US 186152 P; 08.06.2010 US 796521
(62) Divisional of application: 10737685.7
(71) Applicant: Qualcomm Incorporated, San Diego, CA 92121-1714 (US)
(72) Inventor: Patel, Chirag Sureshbhai, San Diego, CA, 92121-1714 (US); Yavuz, Mehmet, San Diego, CA, 92121-1714 (US)
(74) Representative: Wegner, Hans

(57) **Abstract**

An access point is identified based on pilot signal information that appears on different frequencies. Here, a combination of one or more pilot PN spreading codes or one or more PN offsets on different frequencies are used to uniquely identify an access point. For example, upon receipt of a pilot measurement report, a network entity may uniquely identify an access point that transmitted the pilot signals based on at least one pilot PN spreading code or at least one PN offset and a plurality of frequencies identified by the report. Also, to facilitate acquiring this information, a network entity may request an access terminal to conduct an inter-frequency search for pilot signals. Also, an access terminal may maintain pilot information corresponding to access points in a network and use this information to autonomously conduct inter-frequency searches for pilot signals.

## Description

### Claim of Priority

This application claims the benefit of and priority to commonly owned U. S. Provisional Patent Application No. 61/186,152, filed June 11, 2009, and assigned Attorney Docket No. 092454P 1, the disclosure of which is hereby incorporated by reference herein.

### BACKGROUND

### Field

This application relates generally to wireless communication and more specifically, but not exclusively, to the use of pilot signals on multiple frequencies.

### Introduction

A wireless communication network may be deployed over a geographical area to provide various types of services (e.g., voice, data, multimedia services, etc.) to users within that geographical area. In a typical implementation, access points (e.g., macro access points providing macro cell coverage) are distributed throughout a network to provide wireless connectivity for access terminals (e.g., cell phones) that are operating within the geographical area served by the network.

As the demand for high-rate and multimedia data services rapidly grows, there lies a challenge to implement efficient and robust communication systems with enhanced performance. To supplement conventional network access points (e.g., macro access points), small-coverage access points may be deployed (e.g., installed in a user's home) to provide more robust indoor wireless coverage or other coverage for access terminals. Such small-coverage access points may be referred to as, for example, femto access points, femto cells, home NodeBs, home eNodeBs, or access point base stations. Typically, such small-coverage access points are connected to the Internet and the mobile operator's network via a DSL router or a cable modem.

In general, at a given point in time, an access terminal will be served by a given access point. As the access terminal roams throughout the geographical area associated with the network, the access terminal may move away from its serving access point and move closer to another access point. Consequently, signal conditions for the access terminal within a given cell may change, whereby the access terminal may be better served by another access point in the network. For example, when an access terminal gets close to a particular access point, it may be desired to enable handoff (i.e., idle or active handoff) to that particular access point due to better radio frequency (RF) coverage provided by that access point. A typical example would be where a mobile subscriber currently served by a macro cell comes to a location (e.g., the subscriber's home) where a femto cell is deployed. Handover to a femto cell from a macro cell may be referred to as hand-in. Hand-in when the access terminal is in an active voice or data session is termed active hand-in. Active hand-in is essential to enrich user experience with femto cells because a user will expect good voice quality and call continuity not only when the user comes home but also when the user moves in and around the home (e.g., the backyard) going back and forth between femto cell coverage and macro cell coverage. Additionally, active hand-in offloads traffic from the macro network and frees up resources for other users. However, in some aspects, seamless active hand-in is challenging and existing solutions for hand-in have some drawbacks as discussed below.

For active hand-in, the network (e.g., macro network) needs to be able to identify the target access point where the voice or data session is to be transferred. Thus, to maintain mobility for the access terminal, the access terminal regularly monitors for pilot signals from nearby access points to identify potential target access points to which the access terminal may be handed-over. Here, to facilitate identifying these access points, each access point transmits a pilot signal with a unique pseudorandom noise (PN) spreading code. Different access points in the network may use different pilot spreading (also sometimes known as scrambling code) codes (e.g., for the case of a UMTS network), or use the same spreading code with different phase offsetscommonly referred to as PN offsets (e.g., for the case of a cdma2000 network). Thus, each access point can be uniquely identified based on the PN offset or spreading code used by the access point to transmit its pilot signal. In conventional macro networks, the target access point for handover between two cells is identified based on a forward link (FL) signal quality report (e.g., pilot strength measurement message (PSMM) or candidate frequency search response message in cdma2000 1xRTT technology) sent by the access terminal. For convenience, a FL signal quality report is referred to as a PSMM in the disclosure that follows. It should be appreciated, however, that such a report may be named differently for different technologies. The PSMM contains the FL signal quality (typically pilot strength Ecp/Io) of neighboring access points and pilot phase associated with each of these access points. The pilot phase that is reported can be mapped to the unique signature (e.g. pilot PN code/offset) for a particular access point. This pilot PN offset report allows the macro network to pick the "best" access point as the handoff target.

In practice, a relatively large number of small-coverage access points may be deployed in a given area. Consequently, several of these access points may use the same pilot spreading code or PN offset for their pilot signals since the number of available pilot spreading codes is typically limited. For example, unique identification for active hand-in from a macro access point to a femto access point may be difficult in femto cell deployments because only a few PN offsets (e.g. 5) may be available and shared amongst hundreds of femto access points within the coverage area of the macro access point. The main reasons behind allocating few PN offsets to femto access points are: 1) a lack of unused PN offsets since, when macro and femto access points are on the same frequency, the macro access points will have used most of the PN space and/or 2) a limit on the number of femto PNs that a macro access point can advertise in its neighbor list message to assist an access terminal in searching neighboring PNs. Even when femto access points are not on the same frequency as macro access points, femto access points radiate beacons consisting of pilot and overhead channels on the macro frequencies to attract access points to the femto access points. Consequently, the number of PN offsets available for beacon pilot transmissions are limited. Thus, heavy PN re-use in femto cell deployments makes unique target femto access point identification for active hand-in difficult. This may be especially true for legacy access terminals and femto cells. As a result, confusion may exist as to which access point (e.g., which potential handover target) is being identified when an access terminal in the network reports to its serving access point (e.g., the handover source) that a pilot signal having a given pilot spreading code or PN offset has been received from an access point.

Conventional solutions for dealing with the above active hand-in problem include reverse link (RL) sensing by femto cells and radiation of multiple pilots from femto cells on a beacon frequency and/or a femto FL service frequency. An example of RL sensing is disclosed in U.S. Patent Application Publication No. 2010/0130210. An example of the use of multiple pilots is disclosed in U.S. Patent Application Publication No. 2010/0135234. PCT Application No. PCT/US2007/010965 discloses a system where each base station transmits a signal having a pattern with at least two time phase shifts relative to at least one time benchmark, where the combination of the phase shifts allows identification of the transmitting base station. However, the RL sensing solution requires several femto cells to measure the RL for hand-in of a single access terminal and imposes signaling load on the network. Further, this solution is prone to errors due to radiofrequency (RF) calibration and fading aspects. The multiple pilot transmission solution is prone to errors in dense femto cell deployments because it relies on the relative phase difference between the PN offsets of the multiple pilots to identify a femto cell. In view of the above, there is a need for effective techniques for identifying access points so that other nodes in the network may efficiently communicate with the access points.

### SUMMARY

A summary of sample aspects of the disclosure follows. In the discussion herein, a reference to the term aspects may refer to one or more aspects of the disclosure.

The disclosure relates in some aspects to a scheme where an access point (e.g., a femto cell) may be identified based on pilot signals that are transmitted by this access point on different frequencies. Here, a combination of one or more pilot spreading (also known as scrambling) codes on different frequencies or one or more PN offsets corresponding to a PN spreading code on different frequencies may be used to uniquely identify an access point. For example, access points in a network may each use one or more pilot PN spreading codes (e.g., which may be associated with at least one pilot PN offset) to transmit multiple pilot signals on multiple frequencies (e.g., a service frequency and at least one beacon frequency). An access terminal in the vicinity of one of these access points may measure pilot signals on multiple frequencies and send one or more pilot measurement reports including information about these pilot signals to its serving access point. The serving access point or some other network entity may then identify the access point that sent the pilot signals based on the pilot information (e.g., which may identify one or more of: pilot PN spreading code(s), PN offset(s), or frequency or frequencies on which a reported pilot PN spreading code/PN offset was detected) identified by the received pilot information. Consequently, the serving access point or other network entity may uniquely identify the access point as a potential target for handover of the access terminal. Moreover, identification may be achieved without relying on the phase differences between PN offsets as in the multiple pilot transmission solution discussed above (e.g., as disclosed in U.S. Patent Application Publication No. 2010/0135234). Rather, in some aspects, an access point may be identified solely based on which pilot PN spreading code(s) or PN offset(s) the access point is using to sent pilot signals, and which frequencies the code(s) or offset(s) are being used on.

The disclosure relates in some aspects to requesting an access terminal to conduct an inter-frequency pilot search. For example, a network entity may receive pilot measurement information that indicates that an access terminal received a pilot signal on a particular frequency. As a result of receiving this information, the network entity may send a message that requests the access terminal to conduct a pilot signal search on at least one other frequency. In this way, pilot information may be acquired on multiple frequencies to enable the network entity to uniquely identify the access point that sent the pilot signals.

The disclosure relates in some aspects to maintaining pilot information and using this information to determine whether to conduct an inter-frequency pilot search. For example, an access terminal may maintain information that associates an access point with at least one pilot PN spreading code and/or at least one PN offset used by the access point to transmit pilot signals on a plurality of frequencies. Upon receipt of a pilot signal on one of these frequencies, the access terminal may then search for pilot signal(s) on another one (or several other) of these frequencies. In this way, the access terminal may acquire information that may be used to uniquely identify the access point that sent the pilot signals.

### BRIEF DESCRIPTION OF THE DRAWINGS

These and other sample aspects of the disclosure will be described in the detailed description and the appended claims that follow, and in the accompanying drawings, wherein:

FIG. 1 is a simplified block diagram of several sample aspects of a communication system that employs multi-frequency pilot signaling;

FIGs. 2 and 3 are a flowchart of several sample aspects of operations that may be performed to identify an access point that transmits pilot signals on multiple frequencies;

FIGs. 4 and 5 are a flowchart of several sample aspects of operations that may be performed in conjunction with requesting an access terminal to conduct a search for a pilot signal on another frequency;

FIGs. 6 and 7 are a flowchart of several sample aspects of operations that may be performed by an access terminal to autonomously conduct a search for a pilot signal on another frequency;

FIG. 8 is a flowchart of several sample aspects of operations that may be performed to identify an access point based on pilot strength information;

FIG. 9 is a flowchart of several sample aspects of operations that may be performed to identify an access point based on reports from several access points;

FIG. 10 is a flowchart of several sample aspects of operations that may be performed by a serving access point to identify an access point;

FIG. 11 is a flowchart of several sample aspects of operations that may be performed by a network entity to identify an access point;

FIG. 12 is a simplified block diagram of several sample aspects of components that may be employed in communication nodes;

FIG. 13 is a simplified diagram of a wireless communication system;

FIG. 14 is a simplified diagram of a wireless communication system including femto nodes;

FIG. 15 is a simplified diagram illustrating coverage areas for wireless communication;

FIG. 16 is a simplified block diagram of several sample aspects of communication components; and

FIGS. 17-19 are simplified block diagrams of several sample aspects of apparatuses configured to use multi-frequency pilot signaling as taught herein.

In accordance with common practice the various features illustrated in the drawings may not be drawn to scale. Accordingly, the dimensions of the various features may be arbitrarily expanded or reduced for clarity. In addition, some of the drawings may be simplified for clarity. Thus, the drawings may not depict all of the components of a given apparatus (e.g., device) or method. Finally, like reference numerals may be used to denote like features throughout the specification and figures.

### DETAILED DESCRIPTION

Various aspects of the disclosure are described below. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. Furthermore, an aspect may comprise at least one element of a claim.

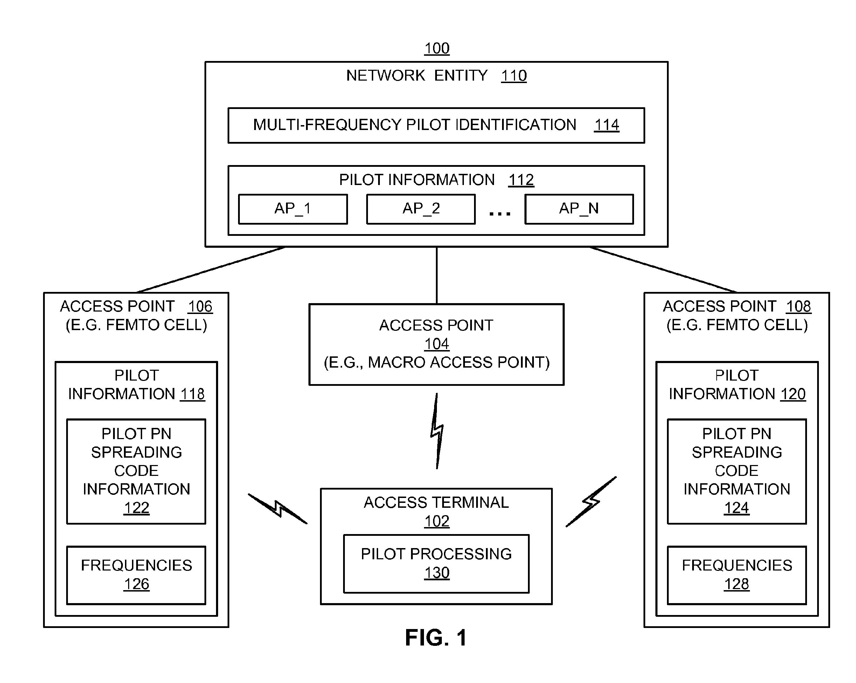

FIG. 1 illustrates several nodes of a sample communication system 100 (e.g., a portion of a communication network). For illustration purposes, various aspects of the disclosure will be described in the context of one or more access terminals, access points, and network entities that communicate with one another. It should be appreciated, however, that the teachings herein may be applicable to other types of apparatuses or other similar apparatuses that are referenced using other terminology. For example, in various implementations access points may be referred to or implemented as base stations or eNodeBs, access terminals may be referred to or implemented as user equipment, mobiles, or mobile stations, and so on.

Access points in the system 100 provide one or more services (e.g., network connectivity) for one or more wireless terminals (e.g., access terminal 102) that may be installed within or that may roam throughout a coverage area of the system 100. For example, at various points in time the access terminal 102 may connect to an access point 104, an access point 106, and access point 108, or some other access point in the system 100 (not shown). Each of these access points may communicate with one or more network entities (represented, for convenience, by network entity 110) to facilitate wide area network connectivity. A network entity may take various forms such as, for example, one or more radio and/or core network entities. Thus, in various implementations a network entity may represent functionality such as at least one of: radio network control, network management (e.g., via an operation, administration, management, and provisioning entity), call control, session management, mobility management, gateway functions, interworking functions, or some other suitable network functionality.

Each access point in the system 100 uses a spreading code (e.g., a PN spreading code as described below) to transmit pilot signals. In accordance with the teachings herein, access points (e.g., femto cells) in the system 100 may be configured to transmit pilot signals on multiple frequencies. As shown in FIG. 1, the access points 106 and 108 (e.g., femto cells) generate pilots according to pilot information 118 and 120, respectively, configured at each of these access points. Here, the access point 106 transmits pilot signals on its designated frequencies 126 (e.g., its femto cell service frequency and one or more beacon frequencies) while the access point 108 transmits pilot signals on its designated frequencies 128 (e.g., its femto cell service frequency and one or more beacon frequencies). Each pilot signal comprises (e.g., is encoded or scrambled with) a designated PN spreading code or an offset (e.g., a PN offset as described below) of a PN spreading code. The PN spreading code and/or PN offset used to transmit a pilot signal is referred to as the pilot PN spreading code/PN offset (or simply as pilot PN spreading code information) from hereon. The access point 106 transmits pilot signals using its designated pilot PN spreading code information while the access point 108 transmits pilot signals using its designated pilot PN spreading code information 124. Here, an access point may use the same pilot PN spreading code/PN offset or different pilot PN spreading codes/PN offsets on different frequencies. Also, in some cases, an access point may use more than one PN spreading code/PN offset on a given frequency to transmit more than one pilot. A few simplified examples follow. In one case, the access point 106 may use pilot PN spreading code A on frequencies 1 and 2, while the access point 108 may use pilot PN spreading code B on frequencies 1 and 2. In another case, the access point 106 may use PN offset M on frequencies 1 and 2, while the access point 108 may use PN offset N on frequencies 1 and 2. In yet another case, the access point 106 may use pilot PN spreading code A on frequency 1 and pilot PN spreading code B on frequency 2, while the access point 108 may use pilot PN spreading code B on frequency 1 and pilot PN spreading code A on frequency 2. In another case, the access point 106 may use PN offset M on frequency 1 and PN offset N on frequency 2, while the access point 108 may use PN offset N on frequency 1 and PN offset M on frequency 2. In still another case, the access point 106 may use pilot PN spreading codes A and B on frequency 1 and pilot PN spreading code C on frequency 2, while the access point 108 may use pilot PN spreading codes B and C on frequency 1 and pilot PN spreading codes A and B on frequency 2. In another case, the access point 106 may use PN offsets M and N on frequency 1 and PN offset O on frequency 2, while the access point 108 may use PN offsets N and O on frequency 1 and PN offsets M and N on frequency 2.

A pilot processing component 130 processes pilot signals received by the access terminal 102, and reports the receipt of pilot signals (e.g., via a pilot measurement report message) to the serving access point 104 of the access terminal 102. This report includes pilot measurement information such as one or more of: the pilot's PN spreading code, or the pilot's PN offset, or the pilot signal's phase relative to the pilot signal of the serving access point, or an indication of pilot strength (e.g. Ecp/Io - the ratio of received pilot energy to the total received power) associated with each received pilot signal.

In some implementations, the serving access point 104 sends this pilot measurement information to another network entity 110 that maintains a record of the pilot information 112 currently being used by different access points (e.g., femto cells) in the system 100. For example, the pilot information 112 may specify, for each access point AP_1 (e.g., access point 106), AP_2 (e.g., access point 108), ... AP_N in the system 100, access point identification information and pilot information currently being used by that access point (e.g., corresponding to pilot information 118, 120, and so on). Thus, upon receipt of pilot measurement information at the network entity 110, a multi-frequency pilot identification component 114 uses the pilot information 112 to determine which access point sent a given set of pilot signals identified by the pilot measurement information.

Various operations may be performed in conjunction with the use of multi-frequency pilot signals as taught herein. In some implementations, to enable the acquisition of multi-frequency pilot signals, an access terminal that has reported receipt of a pilot signal on one frequency may be requested to monitor for pilots signals on at least one other frequency. In some implementations, an access terminal may maintain a database that lists the frequencies and pilot PN spreading code(s)/PN offsets used by various access points. Once the access terminal receives a pilot signal on a given frequency, the access terminal may use this database to autonomously monitor for pilots signals on at least one other frequency.

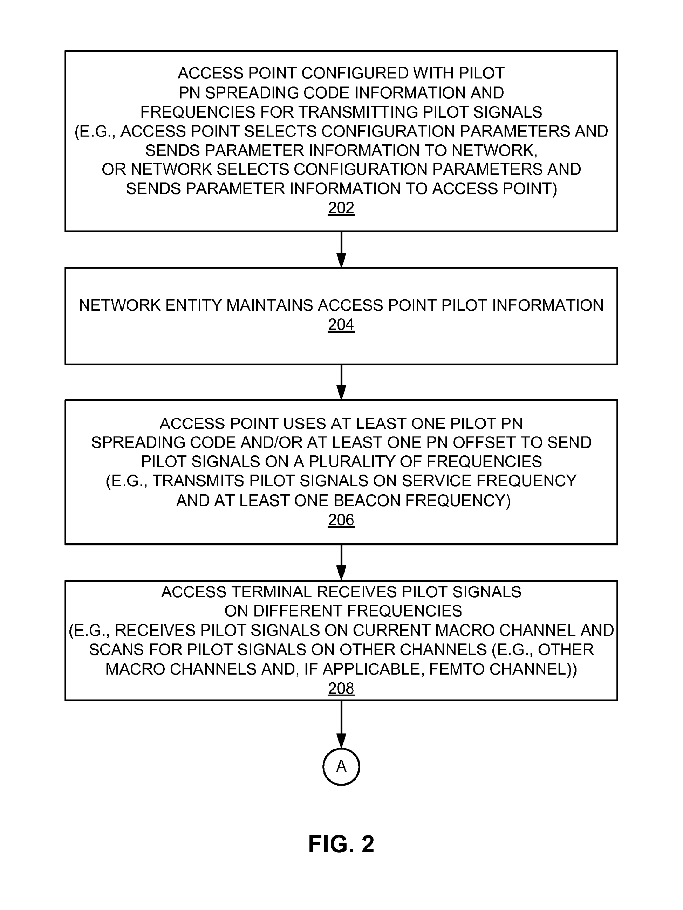

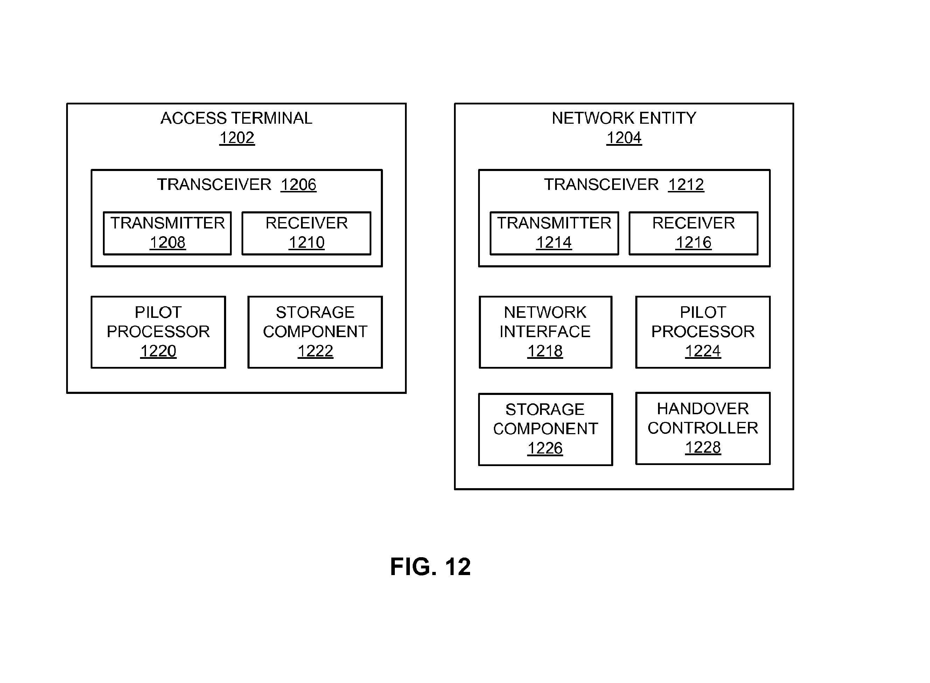

These and other aspects of the disclosure will now be described in more detail in conjunction with the flowcharts of FIGs. 2-11. For convenience, the operations of FIGs. 2 - 11 (or any other operations discussed or taught herein) may be described as being performed by specific components (e.g., components as shown in FIGs. 1 and 12). It should be appreciated, however, that these operations may be performed by other types of components and may be performed using a different number of components. It also should be appreciated that one or more of the operations described herein may not be employed in a given implementation.

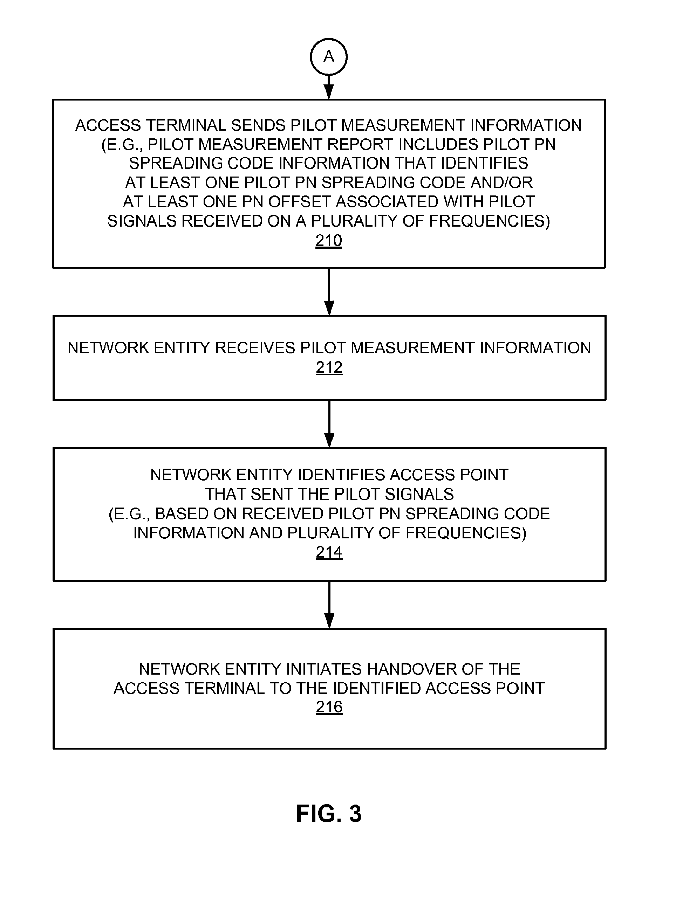

FIGs. 2 and 3 describe sample operations that may be employed in conjunction with identifying an access point that transmits pilot signals on multiple frequencies. For purposes of illustration, this example describes a scenario where a network entity acquires pilot measurement information originally provided by an access terminal and the network entity identifies the access point based on the information from the measurement report. It should be appreciated that other messaging schemes may be employed in other implementations.

As represented by block 202, at some point in time access points (e.g., femto cells) in a system are configured with pilot information that specifies how those access points are to transmit pilot signals. For a given access point, the pilot information (e.g., corresponding to pilot information 118 in FIG. 1) specifies, for example, the frequencies on which the access point is to transmit pilot signals and the pilot PN spreading code/PN offset to be used on each frequency for transmitting the pilot signal.

Pilot PN spreading codes/PN offsets may be assigned for a given access point in various ways. In some cases, different pilot PN spreading codes/PN offsets may be assigned for use on different frequencies. In some cases, the same pilot PN spreading code/PN offset may be assigned for use on more than one frequency (e.g., on all frequencies).

In some cases, different pilot PN spreading codes/PN offsets may be assigned for use on the same frequency. For example, an access point may be configured to transmit more than one pilot signal on a beacon frequency and/or a service frequency. Here, multiple pilots on the same frequency are assigned different pilot spreading codes/PN offsets (e.g., in a similar manner as in U.S. Patent Application Publication No. 2010/0135234, the disclosure of which is hereby incorporated by reference herein). The use of multiple pilot signals and their multiple pilot PN spreading codes/PN offsets on a given frequency may be combined with the use of the same or different pilot PN spreading codes/PN offsets on other frequencies for uniquely identifying an access point. Thus, the use of multiple pilots on a given frequency may increase the total number of dimensions available for uniquely identifying access points.

Preferably, different access points will be configured to use different combinations of frequencies and pilot PN spreading codes/PN offsets. For example, unique combinations may be assigned to all access points within the coverage of a given macro access point. In this way, a macro cell may be able to uniquely identify a given access point for a handover procedure. As another example, unique combinations may be assigned to a set of neighbor access points. In this way, it will be unlikely that an access terminal would receive a given combination from two of these access points. Irrespective of whether all of the combinations in use are unique, the likelihood of access point confusion may be significantly reduced through the use of such combinations.

An access point may be configured with pilot information in various ways. In some implementations, the network determines which frequencies and pilot PN spreading codes/PN offsets are to be used by a given access point and sends this pilot information to the access point. As a specific example, for each frequency assigned to a given access point, the network may allocate a pilot PN offset for that access point from an available PN resource pool for that particular frequency. Advantageously, in this way, the network may plan the configurations of a set of access points to mitigate (e.g., prevent or reduce the likelihood of) confusion between these access points.

In some implementations, each access point determines which frequencies and pilot PN spreading codes/PN offsets are to be used by that access point. Here, an access point may determine the configurations being used by its neighbor access points and then select a configuration that does not conflict with the configuration of any of its neighbors. An access point may determine this neighbor configuration via neighbor discovery, via information received from the network, by monitoring for pilot signals, or by some other suitable technique.

In some cases, the network may provide a set of combinations (e.g., an available PN resource pool) from which the access point may select one combination. In this way, both the network and each access point may have some control over the selected combination to mitigate access point confusion.

The network operations described above may be performed by one or more network entities. In some femto cell-based implementations, these operations may be performed by a femto interworking function. A femto interworking function may provide, for example, functionality that enables macro cells to communicate with femto cells, and vice versa.

As represented by block 204 of FIG. 2, a network entity maintains access point pilot information (e.g., corresponding to pilot information 112 in FIG. 1) for access points deployed in the network. For example, a network entity associated with a given macro cell may maintain the pilot information for all of the femto cells that are deployed within that macro cell. Such a network entity may comprise, for example, a macro access point, a femto interworking function, or some other suitable network entity.

As represented by block 206, each access point configured at block 206 transmits pilot signals based on its configured pilot information. Here, a given access point will use at least one spreading code/PN offset to transmit pilot signals on a plurality of frequencies. For example, an access point may transmit one or more pilot signals on its service frequency (e.g., a femto cell forward link service frequency). In addition, the access point may transmit at least one other pilot signal on at least one beacon frequency (e.g., transmit beacons comprising pilots on a frequency other than the service frequency).

An example that employs three pilot signals that are transmitted on the service frequency and two beacon frequencies follows. The access point transmits a pilot on its service frequency using a PN offset denoted by Fem_PN. The access point transmits a pilot on each of the two beacon frequencies using PN offsets denoted by Bcn1_PN and Bcn2_PN, respectively. In this case, a PN offset tuple (Bcn1_PN, Bcn2_PN, Fem_PN) may be used to uniquely identify the access point.

From the above, it should be appreciated that a large number of PN offset tuples that may serve as access point signatures may be formed if PN offsets used on beacon frequencies and/or a service frequency are assigned different values. For example, for purposes of illustration, assume only one pilot is transmitted on each frequency. In addition, assume there are Nb beacon frequencies (e.g., F_1, F_2, ..., F_Nb) and the number of PN offsets available for use on each of these frequencies is NumBcnPN_(F_i) (i=1, ..., Nb). Denote the PN offsets available on frequency F_i as PN_j(F_i) (j=1,2,...,NumBcnPN(F_i), i = 1, 2, ..., Nb). Further assume that the number of PN offsets available for use on the service frequency (e.g., Fs) is NumFemPN and denote these PN offsets as PN_k(Fs) (k=1, ..., NumFemPN). Then, a (Nb+1) PN offset-tuple containing PN offsets from Nb beacon frequencies and the service frequency Fs can be formed as [PN_j(F_1), PN_j(F_2), ..., PN_j(F_Nb), PN_k(Fs)] (j=1, 2, ..., NumBcnPN(F_i); k=1, 2, ..., NumFemPN) and this combination can uniquely identify an access point (e.g., femto cell). In all, NumBcnPN(F_1) x NumBcnPN(F_2) x ... x NumBcnPN(F_Nb) x NumFemPn distinct PN offset tuples can be formed to identify these access points uniquely.

For the trivial example of Nb = 1 and NumBcnPN(F_1) = 1 and NumFemPN=20, twenty femto access points can be uniquely identified. For another example, assume the number of beacon frequencies Nb=1, with 5 PN offsets available for use on this beacon frequency, i.e., NumBcnPN(F_1) =5 and 20 PN offsets are available for use on the service frequency. In this case, 100 access points can be uniquely identified, which represents five-fold increase in number of unique signatures achieved by using information from multiple frequencies.

As discussed herein, the number of signatures may be increased further by transmitting more than one pilot on a given beacon frequency and/or on the service frequency. Conceptually, the additional pilot may be treated as a new frequency which increases the number of dimensions available for identifying access points. For example, assume two pilots with distinct PNs selected out of the available 20 PN offsets are transmitted on the service frequency and assume a single pilot using one of the five available PN offsets on one beacon frequency is transmitted. Then, approximately 1000 unique signatures can be formed. Thus, a large number of access points may be uniquely identified by combining PN offset information from beacon frequencies and the service frequency. Consequently, good active hand-in performance may be achieved even in dense access point (e.g., femto cell) deployments.

Referring again to FIG. 2, as represented by block 208, an access terminal in the vicinity of an access point as described at block 206 may thus receive pilot signals on different frequencies. For example, in a case where an access terminal is currently being served by a macro cell, the access terminal may receive pilot signals on that macro frequency (i.e., the macro channel used by that macro cell). In addition, the access terminal may scan for pilot signals on at least one other frequency (e.g., a femto channel or one or more other macro channels).

As represented by block 210 of FIG. 3, the access terminal sends a pilot measurement report including pilot measurement information to its serving access point. As discussed herein, this pilot measurement information may include pilot PN spreading code information that identifies at least one pilot PN spreading code/PN offset associated with pilot signals received on a plurality of frequencies.

As represented by block 212, a network entity that will ultimately identify the access point(s) that sent the pilot signals receives the pilot measurement information provided by the access terminal. As discussed above, this network entity may comprise the serving access point (e.g., macro access point) for the access terminal or some other network entity. In the former case, the serving access point receives the pilot measurement information via the pilot measurement report sent by the access terminal. In the latter case, the serving access point may forward the pilot measurement information it received via the pilot measurement report to the other network entity (e.g., a femto interworking function).

As represented by block 214, the network entity identifies one or more access points that sent the pilot signals indicated by the pilot measurement information. A given access point is identified based on a comparison of: 1) the received pilot PN spreading code information, with 2) the frequency and pilot PN spreading code/PN offset combination for that access point as indicated by the access point pilot information maintained by the network entity (described at block 204). Here, it should be appreciated that in some cases the pilot measurement information may include pilot signals sent by multiple access points. Hence, the identification at block 214 may result in the identification of multiple access points.

As represented by block 216, in the event the service provided by an identified access point warrants handover of the access terminal (e.g., as indicated by the pilot signals being sufficiently strong), the network entity initiates handover to the identified access point. For example, context information relating to an active call may be provided to the identified access point (target access point).

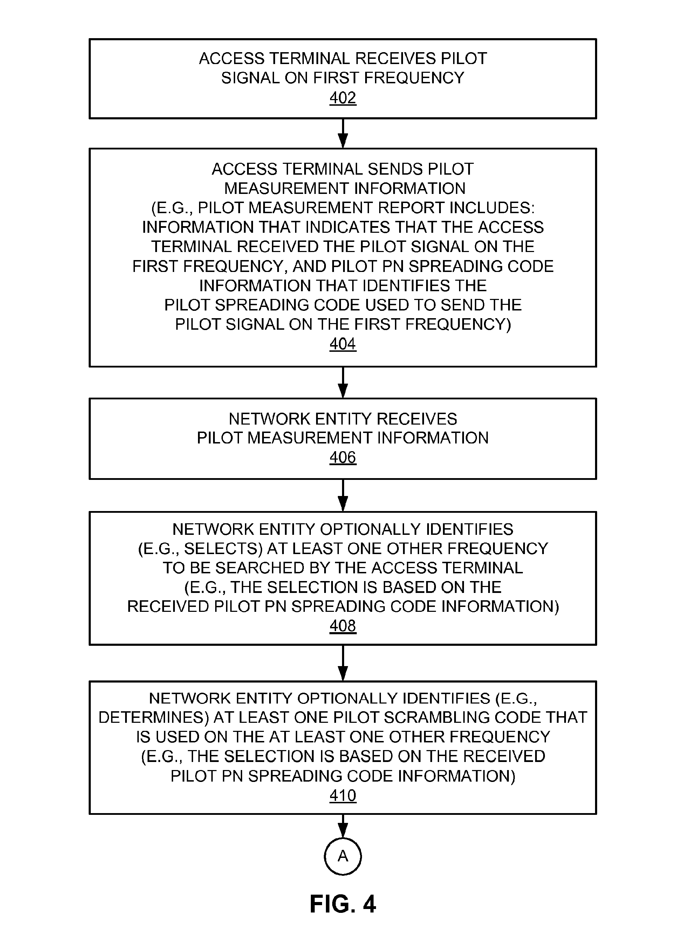

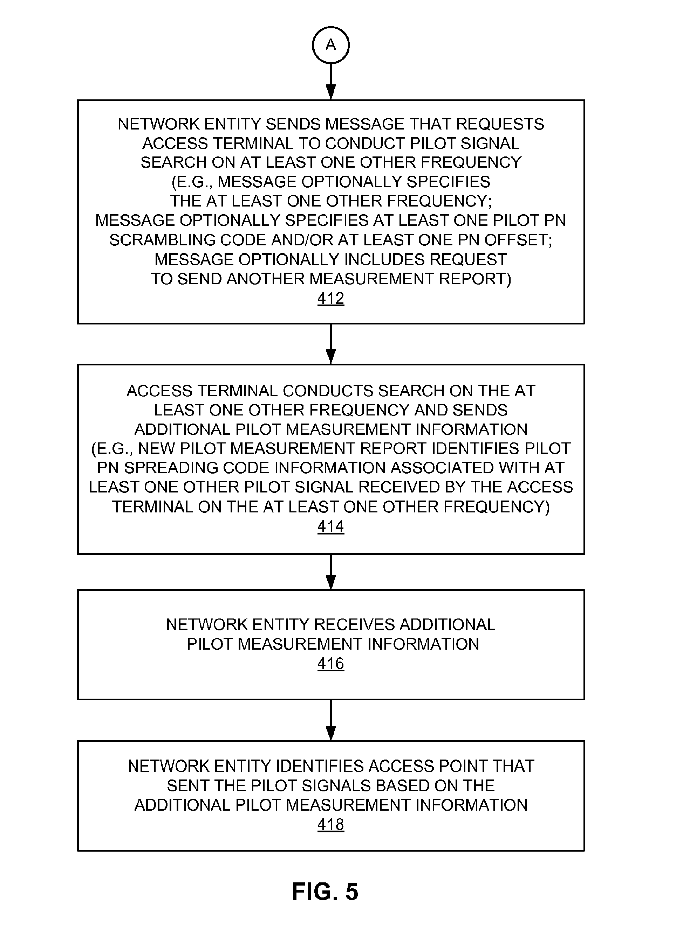

FIGs. 4 and 5 describe sample operations that may be employed in conjunction with requesting an access terminal to conduct a search for pilot signals on at least one frequency. For example, an access terminal may initially report receipt of a pilot signal on a single frequency. In this case, the network may request the access terminal to look for additional pilot signals on other frequencies to acquire all of the pilot signals that the access point transmits.

As represented by blocks 402 and 404 of FIG. 4, at some point in time, an access terminal receives a pilot signal on a first frequency and sends a corresponding pilot measurement report. For example, an access point may be in an active call on a macro access point on a frequency that is different from a femto cell service frequency. Here, if the access terminal comes near a femto cell and detects a strong beacon pilot, the access terminal may report the beacon pilot to the macro access point via a pilot measurement message (e.g. pilot strength measurement message (PSMM) in cdma2000 1xRTT). As discussed herein, the pilot measurement message carries information such as received pilot strength and pilot phase that allows identification of the pilot PN spreading code/PN offset used to transmit the pilot signal. The measurement message may also indicate the frequency on which the pilot signal was received.

As represented by block 406, a network entity receives the pilot measurement information provided by the access terminal. The operations of block 406 may be similar to the operations described above at block 212. In this case, however, rather than triggering active hand-in using just the single pilot information as in a conventional system, upon receiving the pilot measurement information, the network entity may request the access terminal to perform an inter-frequency search to measure neighboring pilots on different beacon frequencies and/or the service frequency.

Accordingly, as represented by block 408, the network entity may optionally identify at least one other frequency to be searched by the access terminal. In some cases, the identification of the at least one other frequency may be based on the pilot PN spreading code/PN offset indicated in the received pilot measurement information. For example, the network entity may identify the combination(s) in the access point pilot information maintained at the network entity that include(s) the reported frequency and pilot PN spreading code/PN offset pair. From that, the network entity may then identify the other frequencies that are associated with the identified combination(s).

As represented by block 410, the network entity may optionally identify at least one pilot PN spreading code/PN offset to be searched for by the access terminal. In some cases, the identification of the at least one pilot PN spreading code/PN offset may be based on the pilot PN spreading code/PN offset indicated in the received pilot measurement information. For example, the network entity may identify the combination(s) in the access point pilot information maintained at the network entity that include(s) the reported frequency and pilot PN spreading code/PN offset pair. From that, the network entity may then determine the pilot PN spreading code(s)/PN offset(s) associated with the identified combination(s).

As represented by block 412 of FIG. 5, the network entity sends a message that requests the access terminal to conduct a pilot signal search on at least one other frequency. In some cases, the message simply comprises a request that the access terminal search at least one other frequency. That is, the message may not specify which frequency or frequencies are to be searched. In other cases (e.g., when block 408 is employed), the message may specify the frequency or frequencies to be searched. In addition, in some cases (e.g., when block 410 is employed), the message may specify one or more pilot PN spreading codes/PN offsets for which the access terminal is to search. Also, the message may request that the access terminal send additional pilot measurement information (e.g., via a pilot measurement report) after conducting the search. In some cases, the message may request that the access terminal make periodic measurements on one or more frequencies, which may be useful to detect pilots on other frequencies such as beacon frequencies when frequency hopping beacons are used. The message may also provide the exact time when measurements should be made in order to improve chance of detecting frequency hopping beacon pilots.

In cases where the network entity is the serving access point for the access terminal, this message may be sent directly to the access terminal. For example, the request and any associated information may be carried by regular in-traffic signaling messages (e.g. a candidate frequency search request message in cdma2000 1x systems).

In cases where the network entity is not the serving access point for the access terminal, this message may be sent to the access terminal via the serving access point. For example, a femto interworking function may send the message to a mobile switching center (MSC) that sends a corresponding message to the serving access point. The serving access point may then send a message including the request to the access terminal.

As represented by block 414, the access terminal conducts a search on the at least one other frequency and, based on the results of that search, sends additional pilot measurement information to the network (e.g., via a pilot measurement report or candidate frequency search report message in cdma2000 1xRTT). For example, the access terminal may briefly tune to each frequency to be searched in an attempt to detect pilots on those frequencies. In the event one or more strong pilot signals are detected, the pilot measurement information will identify at least one frequency on which the pilot signal(s) were detected and at least one pilot PN spreading code/PN offset that was used to transmit the pilot signal(s).

As represented by blocks 416 and 418, the network entity receives the additional pilot measurement information and identifies one or more access points that sent the pilot signals indicated by all of the received pilot measurement information (including the information received at block 406).

The operations described above are applicable irrespective of the frequency on which an access terminal is currently operating. For example, an access point may be in an active call with a macro cell on a frequency that is shared between a femto cell and a macro cell forward link. In this case, the macro access point can request the access terminal to perform inter-frequency searches on beacon frequencies if they are available and apply the same algorithm.

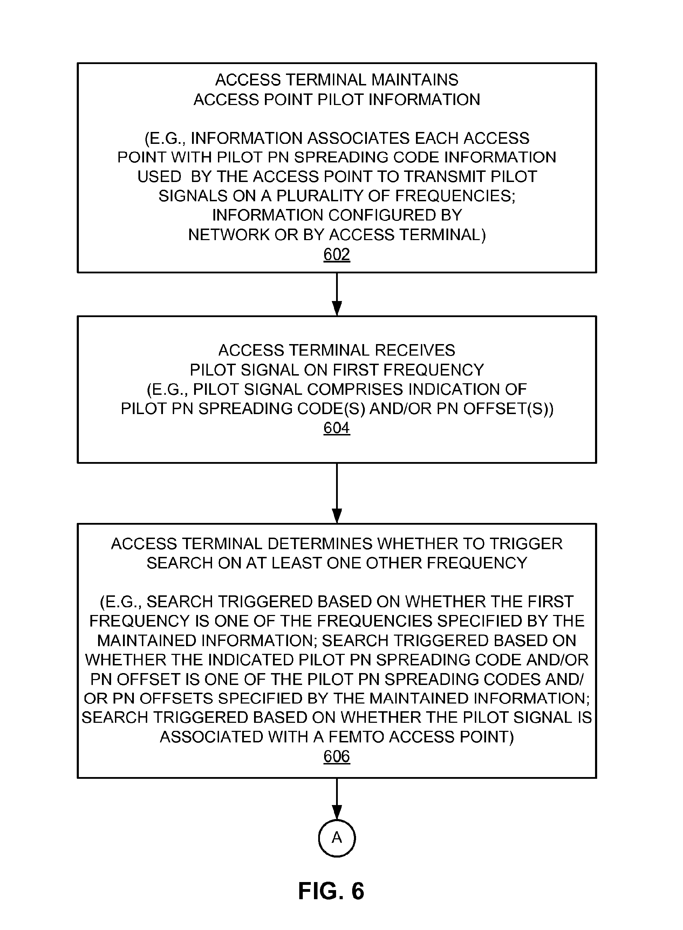

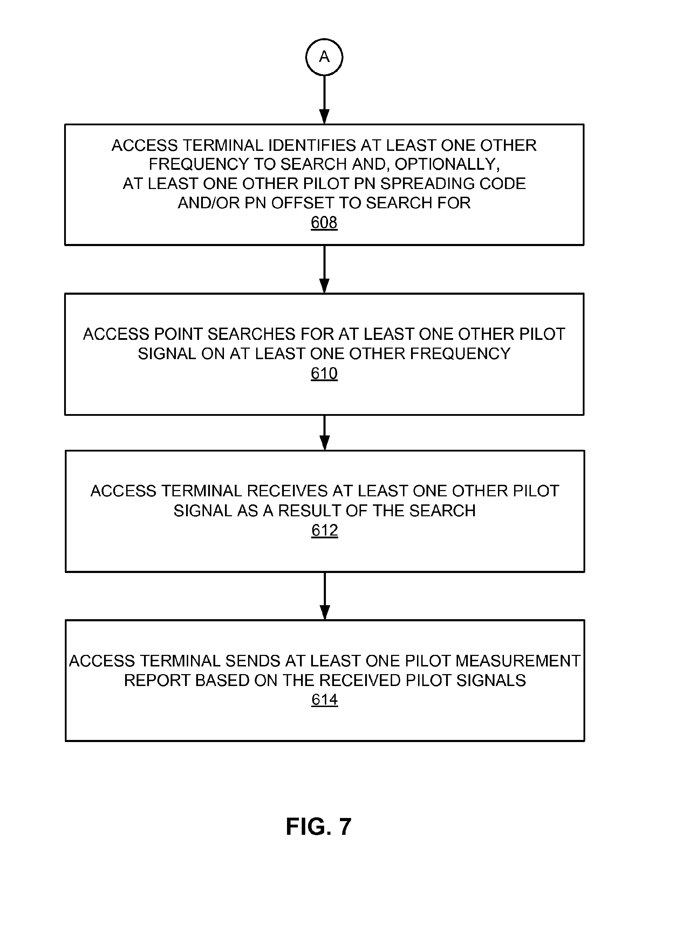

In the scenario above, the network (e.g., macro base station and base station controller) sends an in-traffic inter-frequency search request after a pilot measurement report is sent by the access terminal. To reduce the processing load on the network, an access terminal may be configured to maintain an internal database that specifies which pilot PN spreading codes/PN offsets are expected on different frequencies. Upon encountering a pilot signal on a beacon frequency or femto cell FL service frequency, the access terminal may then trigger an inter-frequency neighbor pilot search on these frequencies automatically. FIGs. 6 and 7 describe sample operations that may be performed by an access terminal that maintains information about access point pilots and uses that information to search for pilot signals on at least one frequency.

As represented by block 602 of FIG. 6, the access terminal maintains access point pilot information (e.g., an internal database) corresponding to one or more access points. For example, for a given access point, the maintained information may identify: 1) the access point; 2) the frequencies used by that access point to transmit pilot signals; and 3) the pilot PN spreading code(s) /PN offset(s) used by the access point to transmit pilot signals.

An access terminal may obtain the access point pilot information in various ways. For example, an access point may be provisioned with this information or this information may be developed based on self-learning by the access terminal.

In the former case, the network may configure the access terminal with the access point pilot information. For example, the network may send this information to the access terminal whenever there is a change in the information (e.g., whenever an access point reports its pilot information to the network). As another example, the network may send the information to the access terminal wherever the access terminal registers with the network (e.g., registers at a particular macro cell).

In the latter case, an access terminal may discover the pilot information used by various access points. For example, the access terminal may determine the configurations being used by any access points the access terminal encounters in the network. Here, the access terminal may monitor pilot signals transmitted by these access points and keep a record of the pilot signal parameters. As another example, the access terminal may obtain the access point pilot information while connected to a serving access point that learns this information via neighbor discovery or in some other manner.

As represented by block 604, at some point in time, the access terminal receives a pilot signal on a first frequency. As discussed herein, the pilot signal comprises an indication of a pilot PN spreading code/PN offset (e.g., the pilot signal is scrambled by the code, and the code is optionally offset).

As represented by block 606, the access terminal determines whether to trigger a search on at least one other frequency as a result of the received pilot signal. This decision may be based on various factors.

In some cases, a search may be triggered if one or more of the frequency, pilot PN spreading code, or PN offset of the received pilot signal matches corresponding information listed in the maintained information. Here, the access terminal may determine whether any combination in the access point pilot information maintained by the access terminal includes the reported frequency and/or pilot PN spreading code/PN offset. If so, the access terminal may elect to search the other frequencies that are associated with the identified combination(s).

In some cases, a search may be triggered if the received pilot signal is known to be associated with (e.g., transmitted by) a femto access point (corresponding to a femto cell). This determination may be made, for example, based on the reported pilot PN spreading code/PN offset (e.g., a certain range of codes and/or offsets may be assigned only to femto access points). If so, the access terminal may elect to search other frequencies in an attempt to find other pilot signals transmitted by the femto access point.

As represented by block 608 of FIG. 7, the access terminal identifies at least one other frequency to search. As discussed above, this decision may be based on the frequency and/or pilot PN spreading code/PN offset of the received pilot signal. In addition, the access terminal may identify at least one pilot PN spreading code/PN offset for which the access terminal will search. Again, this decision may be based on the frequency and/or pilot PN spreading code/PN offset of the received pilot signal.

As represented by blocks 610 and 612, the access terminal conducts a search for at least one pilot signal on the designated frequency or frequencies. As a result of this search, the access terminal may receive one or more pilot signals. As represented by block 614, the access terminal may then report the search results to the network (e.g., macro access point) to facilitate active handover of the access terminal, if applicable.

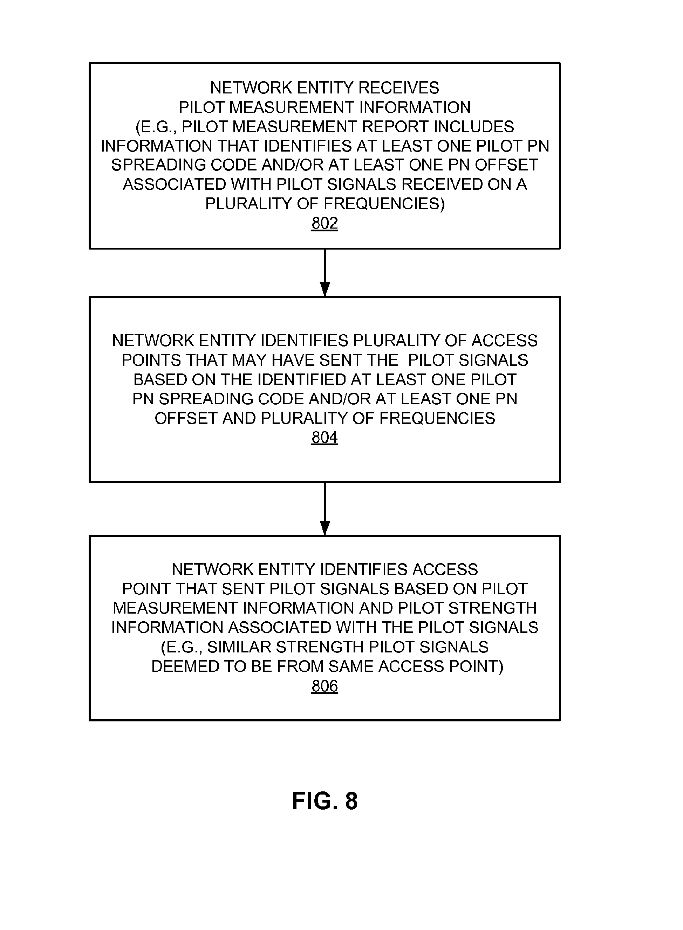

In a dense femto cell deployment, there is some probability that an incorrect femto cell may be identified. For example, if two neighboring femto cells use (PN1, PN2) and (PN1, PN3) on frequency F2, then a measurement report sent by the access terminal may include all three PNs: (PN1, PN2, PN3). In such a case, the network (e.g., macro access point) may not be able to identify the proper target femto cell based simply on the pilot PN spreading codes/PN offsets. FIG. 8 describes sample operations that may be performed to determine which access point of a set of candidate access points sent pilot signals that were reported in a measurement report. In this case, the determination is also based on pilot strength information associated with the pilot signals.

As represented by block 802, a network entity receives pilot measurement information provided by an access terminal. As discussed herein, this pilot measurement information may identify pilot PN spreading code information (e.g., at least one pilot PN spreading code and/or at least one PN offset) associated with pilot signals received on a plurality of frequencies.

As represented by block 804, in this case, the network entity identifies more than one access point as candidates that may have sent the reported pilot PN spreading code(s)/PN offset(s) and frequencies. For example, as discussed above, the network entity may not be able to determine whether a first received pilot PN spreading code/PN offset is associated with a second received pilot PN spreading code/PN offset (which would implicate one access point) or a third received pilot PN spreading code/PN offset (which would implicate another access point).

As represented by block 806, the network may therefore identify a target access point based on the pilot measurement information and based on pilot strength information associated with the pilot signals. For example, a network entity may use the pilot strength reports associated with each of the reported pilot PN spreading codes/PN offset to determine which pilot PN spreading codes/PN offsets are likely to belong to the same femto cell. If the strengths of two reported pilot PN spreading codes/PN offset are substantially similar (e.g. within +/-2 dB of each other), then it is likely that the two pilot PN spreading codes/PN offsets were sent by the same femto cell. Assuming the transmit powers of different pilot signals transmitted by a femto access point are similar, pilot strengths from the same femto cells are likely to be approximately similar in strength since these pilots undergo similar channel fading and other RF impairments and are likely to differ from the strength of the pilots from neighboring cells. Thus, the network entity may identify the two pilot PN spreading codes/PN offsets that are approximately similar in strength as belonging to same femto cell. The network entity may then use this pilot PN spreading code information to identify the hand-in target, or the network entity (e.g., an access point) may forward this pilot PN spreading code information to another network entity (e.g., the MSC) to enable that entity to identify the hand-in target.

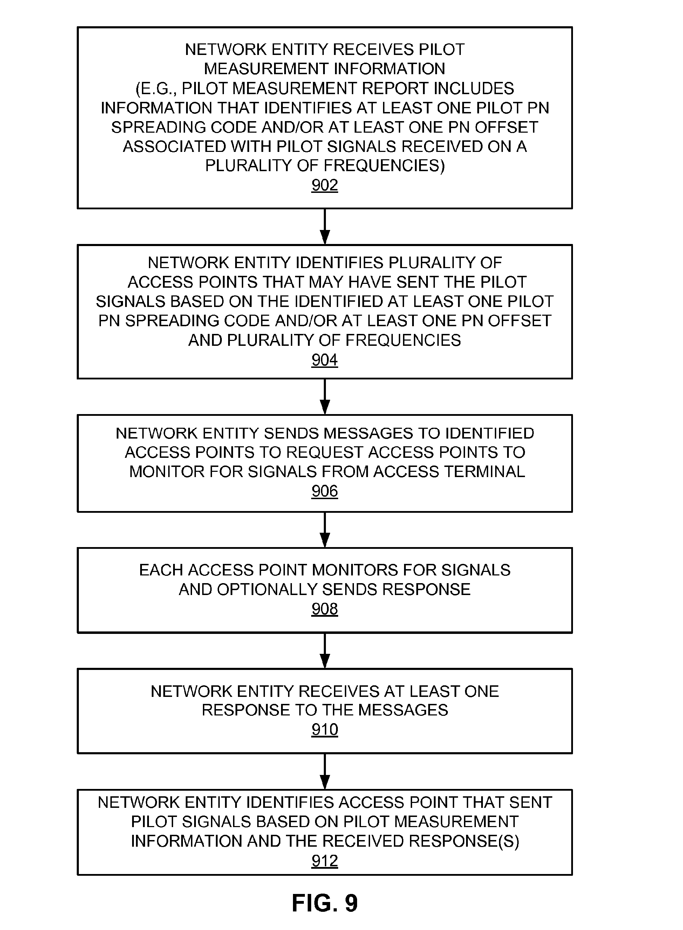

If the number of unique signatures provided by the above techniques is not sufficient to mitigate confusion, these techniques may be combined with a reverse link sensing method to improve active hand-in performance. FIG. 9 describes sample operations that may be performed to determine which access point of a set of candidate access points sent pilot signals that were reported in a measurement report. In this case, the determination also involves requesting a set of candidate target access points to monitor for signals from an access terminal and send back a corresponding report (e.g., in a similar manner as disclosed in U.S. Patent Application Publication No. 2010/0130210, the disclosure of which is hereby incorporated by reference herein).

As represented by block 902, a network entity receives pilot measurement information provided by an access terminal. As discussed herein, this pilot measurement information may identify at least one pilot PN spreading code/PN offset associated with pilot signals received on a plurality of frequencies.

As represented by block 904, in this case, the network entity identifies more than one access point as candidates that may have sent the reported pilot signals. That is, more than one access point in the network (e.g., within the coverage of a macro cell) has been assigned the same frequency and pilot PN spreading code/PN offset combination.

As represented by block 906, the network entity sends messages to the identified access points, whereby the messages request the access points to monitor for signals from the access terminal. For example, the messages may include an identifier (e.g. long code mask used for reverse link transmissions) of the access terminal that the access points may use to monitor the reverse link.

As represented by block 908, each of these access points monitors for signals from the access terminal and, if required, sends back an appropriate response. For example, in the event an access point detects signals from the access terminal, the access point may measure the corresponding received signal strength (e.g. reverse link pilot energy) and provide this information in a report back to the requesting network entity. If, on the other hand, an access point did not detect signals from the access terminal, the access point may send a response indicating this or, in some implementations, refrain from sending a response.

As represented by block 910, the network entity will likely receive at least one response to the messages sent at block 906. Here, assuming that the access points were identified properly at block 904, one of these access points is likely to have transmitted at least some of the pilot signals received by the access terminal. In addition, since the access terminal was able to receive pilot signals from this access point, this access point will likely be able to receive signals from the access terminal.

As represented by block 912, the network entity identifies the access point that sent the pilot signals based on the pilot measurement information received at block 902 and the received response(s). For example, if only one access point was able to receive signals from the access terminal, that access point may be identified as a target access point. Conversely, if multiple access points received signals from the access terminal, the access point that received the reverse link pilot signal at the highest received signal strength may be identified as a target access point. Here, this access point will likely provide better signal quality for the access terminal since it is probably closer to the access terminal. Note that in addition to a reverse link pilot signal, the forward link transmit power of a femto cell may also be taken into account to determine the target access point. For example, a femto cell may report a metric such as the sum of the reverse link received pilot strength and forward link pilot transmit power. Then, a femto cell that reports the largest metric is chosen as the target femto cell.

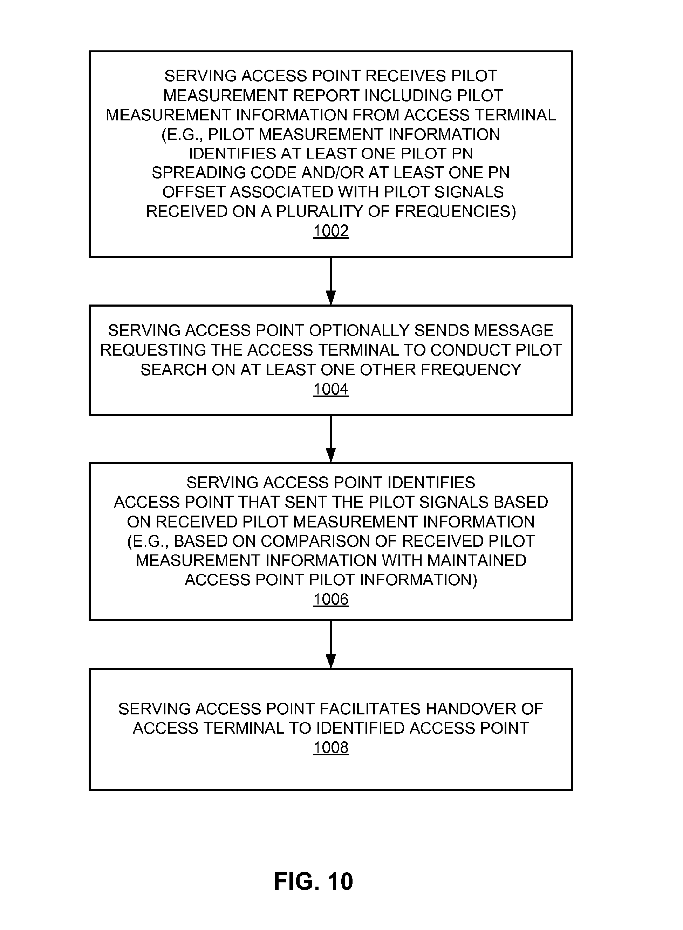

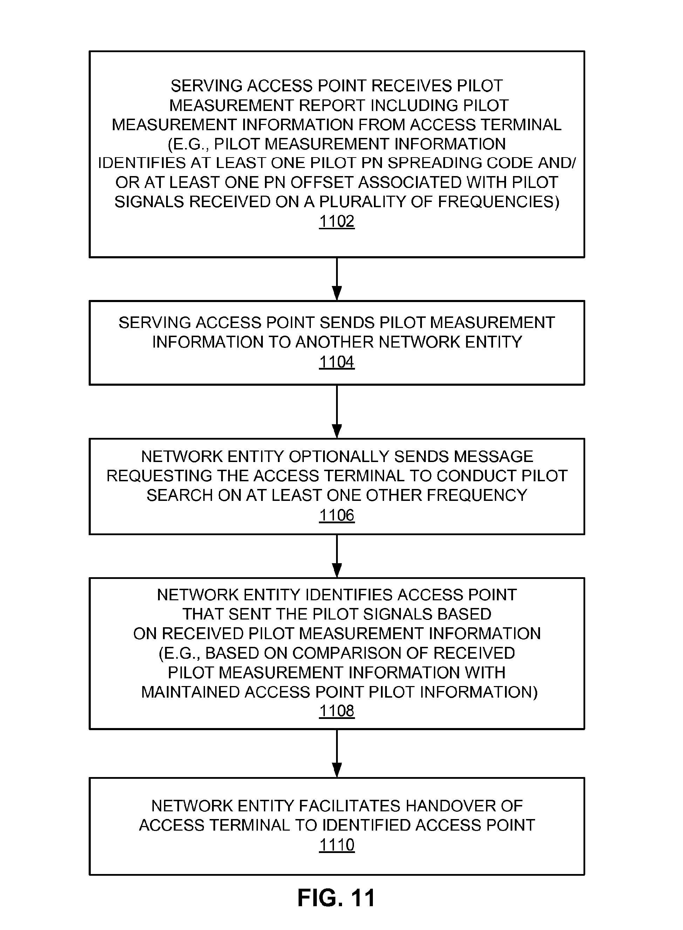

As mentioned above, the network entity that identifies a target access point may take various forms. FIGs. 10 and 11 illustrate how the techniques described herein may be performed differently depending on the type of network entity that performs the access point identification operation.

FIG. 10 describes sample access point identification operations that may be performed by a network entity such as an access point that is currently serving the access terminal that received pilot signals on multiple frequencies. As represented by block 1002, the serving access point for an access terminal receives a pilot measurement report including pilot measurement information from the access terminal. As discussed herein, this pilot measurement information may identify at least one pilot PN spreading code/PN offset associated with pilot signals received on a plurality of frequencies. As represented by block 1004, the serving access point may optionally send a message to the access terminal requesting that the access terminal conduct a search on at least one other frequency (e.g., as discussed above in conjunction with FIGs. 4 and 5). As represented by block 1006, the serving access point identifies one or more access points that sent the pilot signals indicated by the received pilot measurement information, and optionally other information, as discussed herein. As represented by block 1008, the serving access point may then facilitate handover of the access terminal to the identified access point. For example, the serving access point may send context information to the identified access point (target).

FIG. 11 describes sample access point identification operations that may be performed by a network entity that receives pilot measurement information from an access point that is currently serving the access terminal that provided the pilot measurement information. As represented by block 1102, the serving access point for an access terminal receives a pilot measurement report including pilot measurement information from the access terminal. Again, this pilot measurement information may identify at least one pilot PN spreading code/PN offset associated with pilot signals received on a plurality of frequencies. As represented by block 1104, the serving access point then sends the pilot measurement information from the report to another network entity (e.g., an MSC or femto interworking function). As represented by block 1106, the network entity may optionally send a message to the serving access point requesting that the access terminal conduct a search on at least one other frequency. The serving access point then forwards this request to the access terminal. As represented by block 1108, the network entity identifies one or more access points that sent the pilot signals indicated by the received pilot measurement information, and optionally other information, as discussed herein. As represented by block 1110, the network entity may then facilitate handover of the access terminal to the identified access point. For example, the serving access point may initiate handover to the identified access point (target).

The teachings herein may be implemented in various types of networks. For purposes of illustration, an example how an active hand-in call flow employing the teachings herein may be performed in a cdma2000 1X system will be presented. In this example it is assumed that there is one macro cell frequency (F1) where beacons are radiated. It is also assumed that femto cells radiate two pilots on their dedicated frequency (F2). Two femto cells Femto BS1 and Femto BS2 share the same beacon PN on frequency F1 (PN space is limited to one on F1 which is a likely practical scenario), but have unique PN pair on frequency F2. The access terminal is on frequency F1 in an active call with the macro network. The macro base station/base station controller (BS/BSC) sends a neighbor list message (NLM) containing beacon PN(s) to the mobile station (MS) as part of its regular NLM for scanning neighboring BSs on F1. Upon approaching Femto BS2, the MS detects the femto's strong beacon pilot. The MS reports the beacon pilot strength and its PN offset via a PSMM to the macro BS/BSC. The macro BS/BSC cannot determine whether the hand-in target is Femto BS1 or Femto BS2 because both femto BSs have the same PN offset on the beacon pilot. Consequently, the macro BS/BSC sends an inter-frequency search request containing frequency F2 and PN offsets used by femto BSs on frequency F2. The MS briefly tunes to frequency F2 and searches for the PN offsets provided by the inter-frequency search request message. Upon detection of a strong Femto PN1 and Femto PN2 corresponding to the Femto BS2, the MS reports this information in a new PSMM message or candidate frequency search report message. The macro BS/BSC forwards this reported information to the macro network MSC and requests a handoff. The MSC forwards this information to a macro-femto internetworking function (MFIF) entity of the femto network. The MFIF then identifies that the reported PN pair (Femto PN1, Femto PN2) belongs to Femto BS2 and requests Femto BS2 to get ready for a handoff.

In some aspects, the teachings herein may involve an access terminal tuning to different frequencies to make pilot measurements while on an active call with a macro access point. However, this may result in intermittent and/or brief voice call interruption. This interruption should be kept to a minimum to prevent voice quality degradation. One way to achieve this it to limit the number of frequencies to be searched and the number of pilot spreading codes/PN offsets to be searched within each frequency. For example, assuming frequency F2 is available for use for femto cells only, potentially the entire pilot PN spreading code/PN offset space (e.g., 512 PNs) is available for sharing amongst femto access points. This entire space may not be used, however, because the in-traffic inter-frequency search request sent by the network may only be able to advertise a limited number (e.g., approximately 40) pilot PN spreading codes/PN offsets at a time. Also, using many pilot PN spreading codes/PN offsets can create long voice interruption. Therefore, under these circumstances, in some implementations approximately 10-20 pilot PN spreading codes/PN offsets may be used on F2, which can still provide a large number of signatures for unique femto cell identification. Similarly, rather than performing inter-frequency searches on all frequencies, a limited set of frequencies may be used for femto identification. For example, if there are 5 beacon frequencies available, a decision may be made to only use 2 - 3 beacon frequencies for the active hand-in algorithm as long as this number of frequencies provides an adequate number of signatures.

FIG. 12 illustrates several sample components that may be incorporated into nodes such as the access terminal 1202 and a network entity 1204 to perform multi-frequency pilot-related operations as taught herein. The described components also may be incorporated into other nodes in a communication system to provide similar functionality. Also, a given node may contain one or more of the described components. For example, an access terminal may contain multiple transceiver components that enable the access terminal to operate on multiple frequencies and/or communicate via different technologies.

As shown in FIG. 12, the access terminal 1202 includes a transceiver 1206 for communicating with other nodes. The transceiver 1206 includes a transmitter 1208 for sending signals (e.g., information and reports) and a receiver 1210 for receiving signals (e.g., searching for and receiving pilot signals).

The network entity includes a network interface 1218 for communicating with other nodes (e.g., other network nodes). For example, the network interface 1218 (e.g., comprising a receiver and transmitter for sending and receiving signals such as information and reports, not shown) may be configured to communicate with one or more network nodes via a wired or wireless backhaul. In some implementations (e.g., for access point network entities), the network entity includes a transceiver 1212 for communicating with other nodes. The transceiver 1212 includes a transmitter 1214 for sending signals (e.g., information and reports) and a receiver 1216 for receiving signals (e.g., information and reports) via a wireless or wired connection.

The access terminal 1202 and the network entity 1204 also include other components that may be used in conjunction with multi-frequency pilot-related operations as taught herein. For example, the access terminal 1202 includes a pilot processor 1220 (e.g., corresponding in some aspects to pilot processing component 130) for performing pilot-related processing (e.g., determining whether a pilot signal comprises an indication of a pilot PN spreading code/PN offset, triggering a search for a pilot signal, determining whether a pilot signal is associated with a femto access point, sending a pilot measurement report) and for providing other related functionality as taught herein. The access terminal 1202 also includes a storage component 1222 (e.g., a memory component or memory device) for storing information (e.g., maintaining pilot information) and for providing other related functionality as taught herein. The network entity 1204 includes a pilot processor 1224 (e.g., corresponding in some aspects to identification component 114) for performing pilot-related processing (e.g., identifying access points, sending messages, selecting search frequencies) and for providing other related functionality as taught herein. The network entity 1204 also includes a storage component 1226 for storing information (e.g., maintaining pilot information) and for providing other related functionality as taught herein. In addition, the network entity 1204 includes a handover controller 1228 for performing handover-related operations (e.g., initiating handover) and for providing other related functionality as taught herein.

In some implementations, the components of FIG. 12 may be implemented in one or more processors (e.g., that uses and/or incorporates data memory for storing information or code used by the processor(s) to provide this functionality). For example, some or all of the functionality of blocks 1206, 1220, and 1222 may be implemented by a processor or processors of an access terminal and data memory of the access terminal (e.g., by execution of appropriate code and/or by appropriate configuration of processor components). Similarly, some or all of the functionality of blocks 1212, 1218, 1224, 1226, and 1228 may be implemented by a processor or processors of a network entity and data memory of the network entity (e.g., by execution of appropriate code and/or by appropriate configuration of processor components).

As mentioned above, the teachings herein may be employed in a network that includes macro scale coverage (e.g., a large area cellular network such as a 3G network, typically referred to as a macro cell network or a WAN) and smaller scale coverage (e.g., a residence-based or building-based network environment, typically referred to as a LAN). As an access terminal (AT) moves through such a network, the access terminal may be served in certain locations by access points that provide macro coverage while the access terminal may be served at other locations by access points that provide smaller scale coverage. In some aspects, the smaller coverage nodes may be used to provide incremental capacity growth, in-building coverage, and different services (e.g., for a more robust user experience).

A node (e.g., an access point) that provides coverage over a relatively large area may be referred to as a macro access point while a node that provides coverage over a relatively small area (e.g., a residence) may be referred to as a femto access point. It should be appreciated that the teachings herein may be applicable to nodes associated with other types of coverage areas. For example, a pico access point may provide coverage (e.g., coverage within a commercial building) over an area that is smaller than a macro area and larger than a femto area. In various applications, other terminology may be used to reference a macro access point, a femto access point, or other access point-type nodes. For example, a macro access point may be configured or referred to as an access node, base station, access point, eNodeB, macro cell, and so on. Also, a femto access point may be configured or referred to as a Home NodeB, Home eNodeB, access point base station, femto cell, and so on. In some implementations, a node may be associated with (e.g., referred to as or divided into) one or more cells or sectors. A cell or sector associated with a macro access point, a femto access point, or a pico access point may be referred to as a macro cell, a femto cell, or a pico cell, respectively.

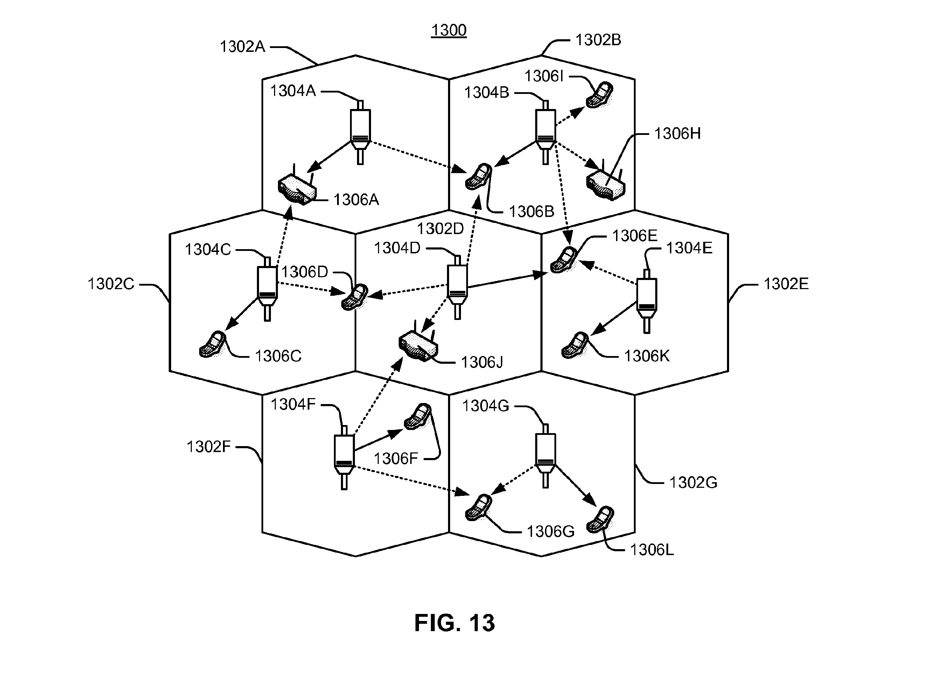

FIG. 13 illustrates a wireless communication system 1300, configured to support a number of users, in which the teachings herein may be implemented. The system 1300 provides communication for multiple cells 1302, such as, for example, macro cells 1302A - 1302G, with each cell being serviced by a corresponding access point 1304 (e.g., access points 1304A - 1304G). As shown in FIG. 13, access terminals 1306 (e.g., access terminals 1306A - 1306L) may be dispersed at various locations throughout the system over time. Each access terminal 1306 may communicate with one or more access points 1304 on a forward link (FL) and/or a reverse link (RL) at a given moment, depending upon whether the access terminal 1306 is active and whether it is in soft handoff, for example. The wireless communication system 1300 may provide service over a large geographic region. For example, macro cells 1302A - 1302G may cover a few blocks in a neighborhood or several miles in rural environment.

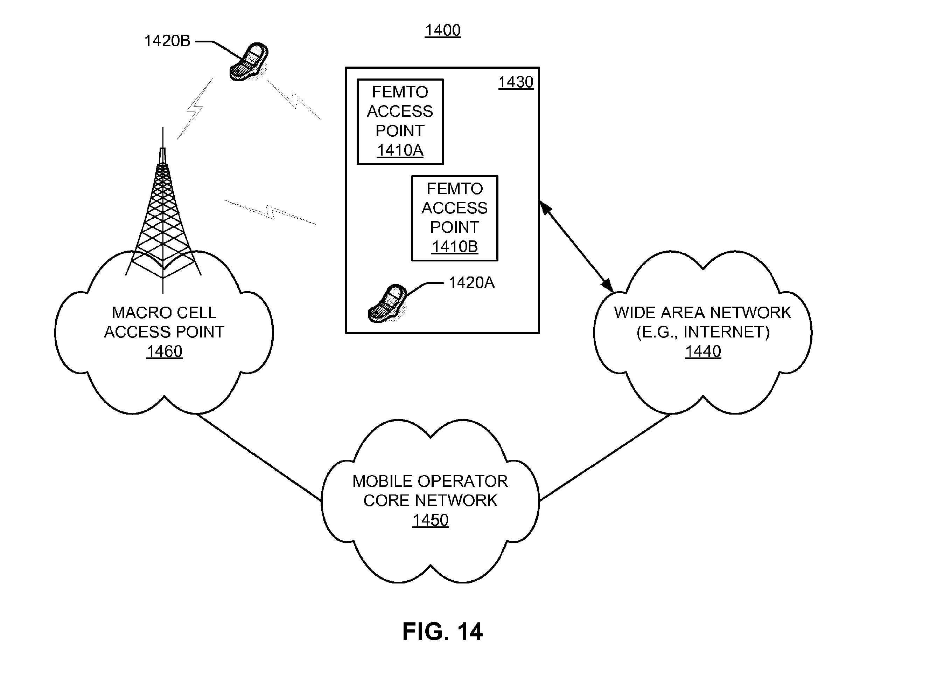

FIG. 14 illustrates an exemplary communication system 1400 where one or more femto access points (i.e., corresponding to femto cells) are deployed within a network environment. Specifically, the system 1400 includes multiple femto access points 1410 (e.g., femto access points 1410A and 1410B) installed in a relatively small scale network environment (e.g., in one or more user residences 1430). Each femto access point 1410 may be coupled to a wide area network 1440 (e.g., the Internet) and a mobile operator core network 1450 via a DSL router, a cable modem, a wireless link, or other connectivity means (not shown). As will be discussed below, each femto access point 1410 may be configured to serve associated access terminals 1420 (e.g., access terminal 1420A) and, optionally, other (e.g., hybrid or alien) access terminals 1420 (e.g., access terminal 1420B). In other words, access to femto access points 1410 may be restricted whereby a given access terminal 1420 may be served by a set of designated (e.g., home) femto access point(s) 1410 but may not be served by any non-designated femto access points 1410 (e.g., a neighbor's femto access point 1410).

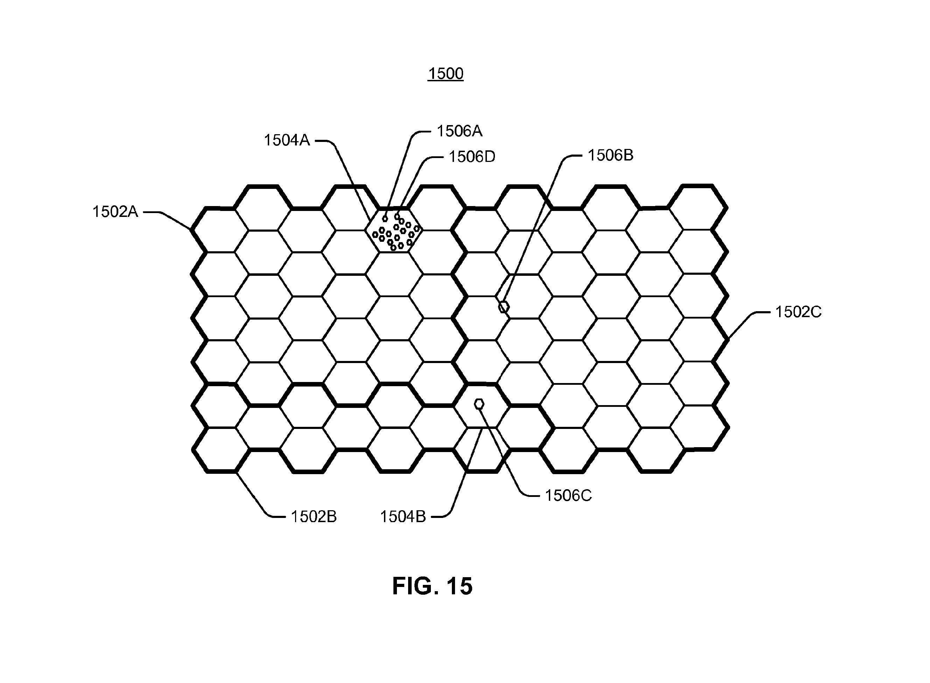

FIG. 15 illustrates an example of a coverage map 1500 where several tracking areas 1502 (or routing areas or location areas) are defined, each of which includes several macro coverage areas 1504. Here, areas of coverage associated with tracking areas 1502A, 1502B, and 1502C are delineated by the wide lines and the macro coverage areas 1504 are represented by the larger hexagons. The tracking areas 1502 also include femto coverage areas 1506. In this example, each of the femto coverage areas 1506 (e.g., femto coverage areas 1506B and 1506C) is depicted within one or more macro coverage areas 1504 (e.g., macro coverage areas 1504A and 1504B). It should be appreciated, however, that some or all of a femto coverage area 1506 may not lie within a macro coverage area 1504. In practice, a large number of femto coverage areas 1506 (e.g., femto coverage areas 1506A and 1506D) may be defined within a given tracking area 1502 or macro coverage area 1504. Also, one or more pico coverage areas (not shown) may be defined within a given tracking area 1502 or macro coverage area 1504.

Referring again to FIG. 14, the owner of a femto access point 1410 may subscribe to mobile service, such as, for example, 3G mobile service, offered through the mobile operator core network 1450. In addition, an access terminal 1420 may be capable of operating both in macro environments and in smaller scale (e.g., residential) network environments. In other words, depending on the current location of the access terminal 1420, the access terminal 1420 may be served by a macro cell access point 1460 associated with the mobile operator core network 1450 or by any one of a set of femto access points 1410 (e.g., the femto access points 1410A and 1410B that reside within a corresponding user residence 1430). For example, when a subscriber is outside his home, he is served by a standard macro access point (e.g., access point 1460) and when the subscriber is at home, he is served by a femto access point (e.g., access point 1410A). Here, a femto access point 1410 may be backward compatible with legacy access terminals 1420.

A femto access point 1410 may be deployed on a single frequency or, in the alternative, on multiple frequencies. Depending on the particular configuration, the single frequency or one or more of the multiple frequencies may overlap with one or more frequencies used by a macro access point (e.g., access point 1460).

In some aspects, an access terminal 1420 may be configured to connect to a preferred femto access point (e.g., the home femto access point of the access terminal 1420) whenever such connectivity is possible. For example, whenever the access terminal 1420A is within the user's residence 1430, it may be desired that the access terminal 1420A communicate only with the home femto access point 1410A or 1410B.

In some aspects, if the access terminal 1420 operates within the macro cellular network 1450 but is not residing on its most preferred network (e.g., as defined in a preferred roaming list), the access terminal 1420 may continue to search for the most preferred network (e.g., the preferred femto access point 1410) using a better system reselection (BSR) procedure, which may involve a periodic scanning of available systems to determine whether better systems are currently available and subsequently acquire such preferred systems. The access terminal 1420 may limit the search for specific band and channel. For example, one or more femto channels may be defined whereby all femto access points (or all restricted femto access points) in a region operate on the femto channel(s). The search for the most preferred system may be repeated periodically. Upon discovery of a preferred femto access point 1410, the access terminal 1420 selects the femto access point 1410 and registers on it for use when within its coverage area.

Access to a femto access point may be restricted in some aspects. For example, a given femto access point may only provide certain services to certain access terminals. In deployments with so-called restricted (or closed) access, a given access terminal may only be served by the macro cell mobile network and a defined set of femto access points (e.g., the femto access points 1410 that reside within the corresponding user residence 1430). In some implementations, an access point may be restricted to not provide, for at least one node (e.g., access terminal), at least one of: signaling, data access, registration, paging, or service.

In some aspects, a restricted femto access point (which may also be referred to as a Closed Subscriber Group Home NodeB) is one that provides service to a restricted provisioned set of access terminals. This set may be temporarily or permanently extended as necessary. In some aspects, a Closed Subscriber Group (CSG) may be defined as the set of access points (e.g., femto access points) that share a common access control list of access terminals.

Various relationships may thus exist between a given femto access point and a given access terminal. For example, from the perspective of an access terminal, an open femto access point may refer to a femto access point with unrestricted access (e.g., the femto access point allows access to any access terminal). A restricted femto access point may refer to a femto access point that is restricted in some manner (e.g., restricted for access and/or registration). A home femto access point may refer to a femto access point on which the access terminal is authorized to access and operate on (e.g., permanent access is provided for a defined set of one or more access terminals). A hybrid (or guest) femto access point may refer to a femto access point on which different access terminals are provided different levels of service (e.g., some access terminals may be allowed partial and/or temporary access while other access terminals may be allowed full access). An alien femto access point may refer to a femto access point on which the access terminal is not authorized to access or operate on, except for perhaps emergency situations (e.g., 911 calls).

From a restricted femto access point perspective, a home access terminal may refer to an access terminal that is authorized to access the restricted femto access point installed in the residence of that access terminal's owner (usually the home access terminal has permanent access to that femto access point). A guest access terminal may refer to an access terminal with temporary access to the restricted femto access point (e.g., limited based on deadline, time of use, bytes, connection count, or some other criterion or criteria). An alien access terminal may refer to an access terminal that does not have permission to access the restricted femto access point, except for perhaps emergency situations, for example, such as 911 calls (e.g., an access terminal that does not have the credentials or permission to register with the restricted femto access point).

For convenience, the disclosure herein describes various functionality in the context of a femto access point. It should be appreciated, however, that a pico access point may provide the same or similar functionality for a larger coverage area. For example, a pico access point may be restricted, a home pico access point may be defined for a given access terminal, and so on.

The teachings herein may be employed in a wireless multiple-access communication system that simultaneously supports communication for multiple wireless access terminals. Here, each terminal may communicate with one or more access points via transmissions on the forward and reverse links. The forward link (or downlink) refers to the communication link from the access points to the terminals, and the reverse link (or uplink) refers to the communication link from the terminals to the access points. This communication link may be established via a single-in-single-out system, a multiple-in-multiple-out (MIMO) system, or some other type of system.

A MIMO system employs multiple (*N_{T}*) transmit antennas and multiple (*N_{R}*) receive antennas for data transmission. A MIMO channel formed by the *N_{T}* transmit and *N_{R}* receive antennas may be decomposed into *N_{S}* independent channels, which are also referred to as spatial channels, where *N_{S}* ≤ min{*N*_{*T*,} *N_{R}*}. Each of the *N_{S}* independent channels corresponds to a dimension. The MIMO system may provide improved performance (e.g., higher throughput and/or greater reliability) if the additional dimensionalities created by the multiple transmit and receive antennas are utilized.

A MIMO system may support time division duplex (TDD) and frequency division duplex (FDD). In a TDD system, the forward and reverse link transmissions are on the same frequency region so that the reciprocity principle allows the estimation of the forward link channel from the reverse link channel. This enables the access point to extract transmit beam-forming gain on the forward link when multiple antennas are available at the access point.

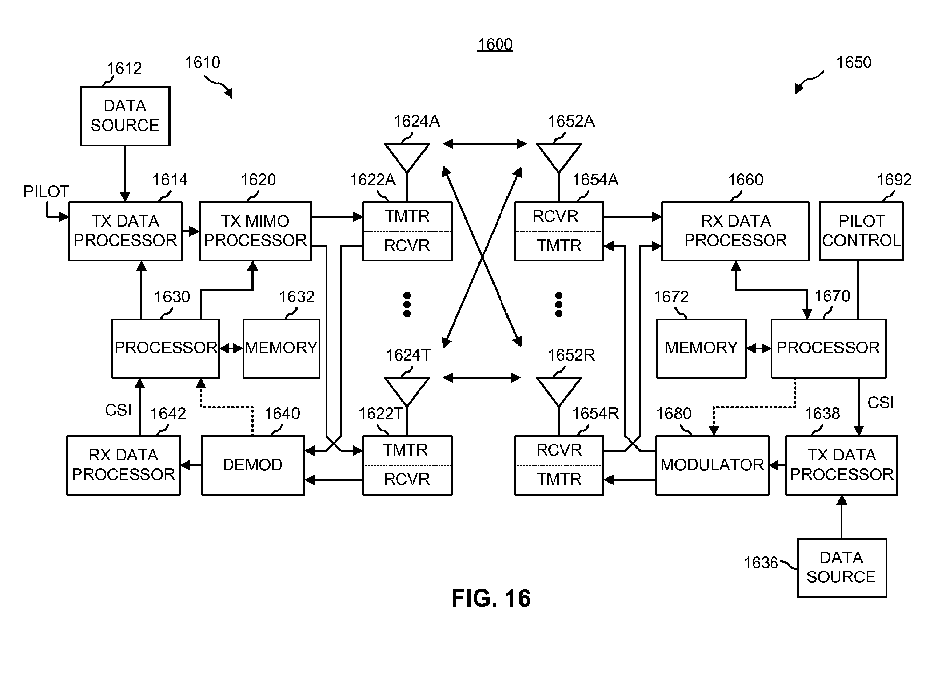

FIG. 16 illustrates a wireless device 1610 (e.g., an access point) and a wireless device 1650 (e.g., an access terminal) of a sample MIMO system 1600. At the device 1610, traffic data for a number of data streams is provided from a data source 1612 to a transmit (TX) data processor 1614. Each data stream may then be transmitted over a respective transmit antenna.

The TX data processor 1614 formats, codes, and interleaves the traffic data for each data stream based on a particular coding scheme selected for that data stream to provide coded data. The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QSPK, M-PSK, or M-QAM) selected for that data stream to provide modulation symbols. The data rate, coding, and modulation for each data stream may be determined by instructions performed by a processor 1630. A data memory 1632 may store program code, data, and other information used by the processor 1630 or other components of the device 1610.

The modulation symbols for all data streams are then provided to a TX MIMO processor 1620, which may further process the modulation symbols (e.g., for OFDM). The TX MIMO processor 1620 then provides *N_{T}* modulation symbol streams to *N_{T}* transceivers (XCVR) 1622A through 1622T. In some aspects, the TX MIMO processor 1620 applies beam-forming weights to the symbols of the data streams and to the antenna from which the symbol is being transmitted.

Each transceiver 1622 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transceivers 1622A through 1622T are then transmitted from *N_{T}* antennas 1624A through 1624T, respectively.

At the device 1650, the transmitted modulated signals are received by *N_{R}* antennas 1652A through 1652R and the received signal from each antenna 1652 is provided to a respective transceiver (XCVR) 1654A through 1654R. Each transceiver 1654 conditions (e.g., filters, amplifies, and downconverts) a respective received signal, digitizes the conditioned signal to provide samples, and further processes the samples to provide a corresponding "received" symbol stream.

A receive (RX) data processor 1660 then receives and processes the *N_{R}* received symbol streams from *N_{R}* transceivers 1654 based on a particular receiver processing technique to provide *N_{T}* "detected" symbol streams. The RX data processor 1660 then demodulates, deinterleaves, and decodes each detected symbol stream to recover the traffic data for the data stream. The processing by the RX data processor 1660 is complementary to that performed by the TX MIMO processor 1620 and the TX data processor 1614 at the device 1610.

A processor 1670 periodically determines which pre-coding matrix to use (discussed below). The processor 1670 formulates a reverse link message comprising a matrix index portion and a rank value portion. A data memory 1672 may store program code, data, and other information used by the processor 1670 or other components of the device 1650.

The reverse link message may comprise various types of information regarding the communication link and/or the received data stream. The reverse link message is then processed by a TX data processor 1638, which also receives traffic data for a number of data streams from a data source 1636, modulated by a modulator 1680, conditioned by the transceivers 1654A through 1654R, and transmitted back to the device 1610.

At the device 1610, the modulated signals from the device 1650 are received by the antennas 1624, conditioned by the transceivers 1622, demodulated by a demodulator (DEMOD) 1640, and processed by a RX data processor 1642 to extract the reverse link message transmitted by the device 1650. The processor 1630 then determines which pre-coding matrix to use for determining the beam-forming weights then processes the extracted message.

FIG. 16 also illustrates that the communication components may include one or more components that perform pilot control operations as taught herein. For example, a pilot control component 1692 may cooperate with the processor 1670 and/or other components of the device 1650 to process pilot signals received from another device (e.g., device 1610). It should be appreciated that for each device 1610 and 1650 the functionality of two or more of the described components may be provided by a single component. For example, a single processing component may provide the functionality of the pilot control component 1692 and the processor 1670.

The teachings herein may be incorporated into various types of communication systems and/or system components. In some aspects, the teachings herein may be employed in a multiple-access system capable of supporting communication with multiple users by sharing the available system resources (e.g., by specifying one or more of bandwidth, transmit power, coding, interleaving, and so on). For example, the teachings herein may be applied to any one or combinations of the following technologies: Code Division Multiple Access (CDMA) systems, Multiple-Carrier CDMA (MCCDMA), Wideband CDMA (W-CDMA), High-Speed Packet Access (HSPA, HSPA+) systems, Time Division Multiple Access (TDMA) systems, Frequency Division Multiple Access (FDMA) systems, Single-Carrier FDMA (SC-FDMA) systems, Orthogonal Frequency Division Multiple Access (OFDMA) systems, or other multiple access techniques. A wireless communication system employing the teachings herein may be designed to implement one or more standards, such as IS-95, cdma2000, IS-856, W-CDMA, TDSCDMA, and other standards. A CDMA network may implement a radio technology such as Universal Terrestrial Radio Access (UTRA), cdma2000, or some other technology. UTRA includes W-CDMA and Low Chip Rate (LCR). The cdma2000 technology covers IS-2000, IS-95 and IS-856 standards. A TDMA network may implement a radio technology such as Global System for Mobile Communications (GSM). An OFDMA network may implement a radio technology such as Evolved UTRA (E-UTRA), IEEE 802.11, IEEE 802.16, IEEE 802.20, Flash-OFDM®, etc. UTRA, E-UTRA, and GSM are part of Universal Mobile Telecommunication System (UMTS). The teachings herein may be implemented in a 3GPP Long Term Evolution (LTE) system, an Ultra-Mobile Broadband (UMB) system, and other types of systems. LTE is a release of UMTS that uses E-UTRA. UTRA, E-UTRA, GSM, UMTS and LTE are described in documents from an organization named "3rd Generation Partnership Project" (3GPP), while cdma2000 is described in documents from an organization named "3rd Generation Partnership Project 2" (3GPP2). Although certain aspects of the disclosure may be described using 3GPP terminology, it is to be understood that the teachings herein may be applied to 3GPP (e.g., Re199, Re15, Re16, Re17) technology, as well as 3GPP2 (e.g., 1xRTT, 1xEV-DO RelO, RevA, RevB) technology and other technologies.

The teachings herein may be incorporated into (e.g., implemented within or performed by) a variety of apparatuses (e.g., nodes). In some aspects, a node (e.g., a wireless node) implemented in accordance with the teachings herein may comprise an access point or an access terminal.

For example, an access terminal may comprise, be implemented as, or known as user equipment, a subscriber station, a subscriber unit, a mobile station, a mobile, a mobile node, a remote station, a remote terminal, a user terminal, a user agent, a user device, or some other terminology. In some implementations an access terminal may comprise a cellular telephone, a cordless telephone, a session initiation protocol (SIP) phone, a wireless local loop (WLL) station, a personal digital assistant (PDA), a handheld device having wireless connection capability, or some other suitable processing device connected to a wireless modem. Accordingly, one or more aspects taught herein may be incorporated into a phone (e.g., a cellular phone or smart phone), a computer (e.g., a laptop), a portable communication device, a portable computing device (e.g., a personal data assistant), an entertainment device (e.g., a music device, a video device, or a satellite radio), a global positioning system device, or any other suitable device that is configured to communicate via a wireless medium.

An access point may comprise, be implemented as, or known as a NodeB, an eNodeB, a radio network controller (RNC), a base station (BS), a radio base station (RBS), a base station controller (BSC), a base transceiver station (BTS), a transceiver function (TF), a radio transceiver, a radio router, a basic service set (BSS), an extended service set (ESS), a macro cell, a macro node, a Home eNB (HeNB), a femto cell, a femto node, a pico node, or some other similar terminology.

In some aspects a node (e.g., an access point) may comprise an access node for a communication system. Such an access node may provide, for example, connectivity for or to a network (e.g., a wide area network such as the Internet or a cellular network) via a wired or wireless communication link to the network. Accordingly, an access node may enable another node (e.g., an access terminal) to access a network or some other functionality. In addition, it should be appreciated that one or both of the nodes may be portable or, in some cases, relatively non-portable.

Also, it should be appreciated that a wireless node may be capable of transmitting and/or receiving information in a non-wireless manner (e.g., via a wired connection). Thus, a receiver and a transmitter as discussed herein may include appropriate communication interface components (e.g., electrical or optical interface components) to communicate via a non-wireless medium.

A wireless node may communicate via one or more wireless communication links that are based on or otherwise support any suitable wireless communication technology. For example, in some aspects a wireless node may associate with a network. In some aspects the network may comprise a local area network or a wide area network. A wireless device may support or otherwise use one or more of a variety of wireless communication technologies, protocols, or standards such as those discussed herein (e.g., CDMA, TDMA, OFDM, OFDMA, WiMAX, Wi-Fi, and so on). Similarly, a wireless node may support or otherwise use one or more of a variety of corresponding modulation or multiplexing schemes. A wireless node may thus include appropriate components (e.g., air interfaces) to establish and communicate via one or more wireless communication links using the above or other wireless communication technologies. For example, a wireless node may comprise a wireless transceiver with associated transmitter and receiver components that may include various components (e.g., signal generators and signal processors) that facilitate communication over a wireless medium.

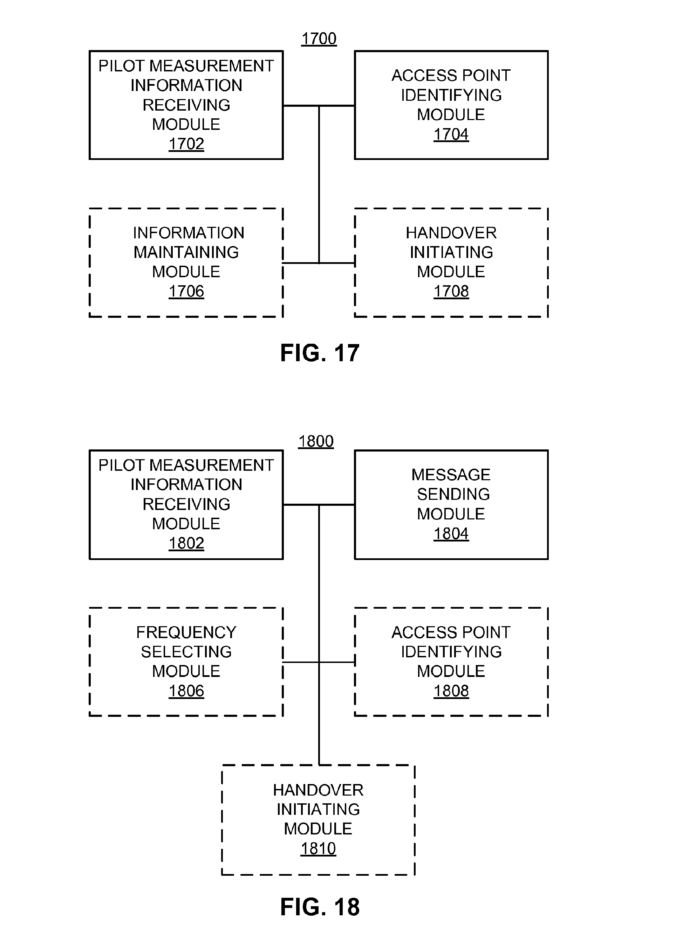

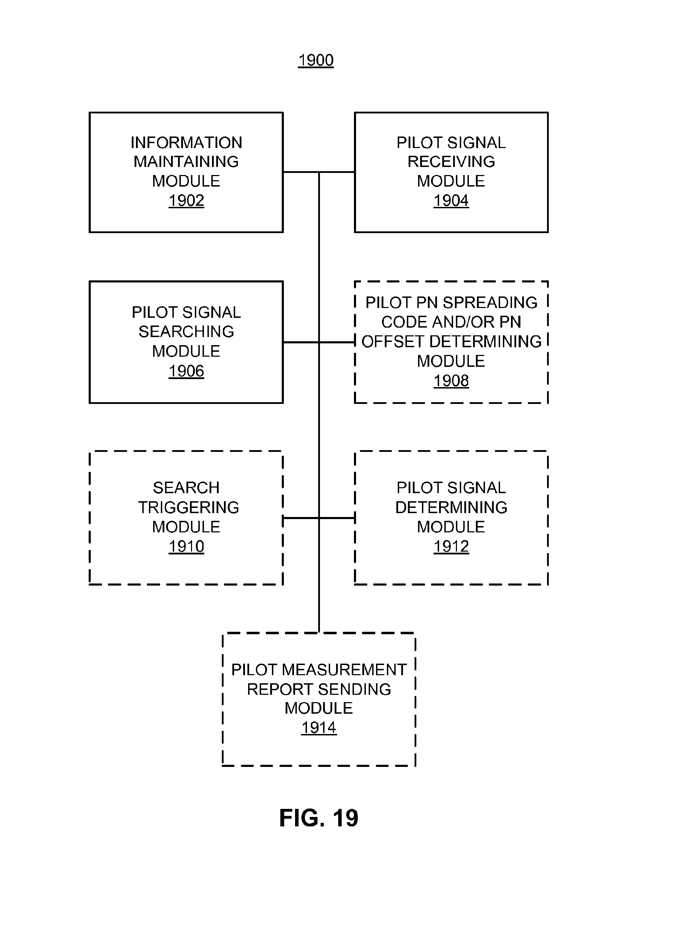

The functionality described herein (e.g., with regard to one or more of the accompanying figures) may correspond in some aspects to similarly designated "means for" functionality in the appended claims. Referring to FIGS. 17 - 19, apparatuses 1700, 1800, and 1900 are represented as a series of interrelated functional modules. Here, a pilot measurement information receiving module 1702 may correspond at least in some aspects to, for example, a receiver as discussed herein. An access point identifying module 1704 may correspond at least in some aspects to, for example, a pilot processor as discussed herein. An information maintaining module 1706 may correspond at least in some aspects to, for example, a storage component as discussed herein. A handover initiating module 1708 may correspond at least in some aspects to, for example, a handover controller as discussed herein. A pilot measurement information receiving module 1802 may correspond at least in some aspects to, for example, a receiver as discussed herein. A message sending module 1804 may correspond at least in some aspects to, for example, a pilot processor as discussed herein. A frequency selecting module 1806 may correspond at least in some aspects to, for example, a pilot processor as discussed herein. An access point identifying module 1808 may correspond at least in some aspects to, for example, a pilot processor as discussed herein. A handover initiating module 1810 may correspond at least in some aspects to, for example, a handover controller as discussed herein. An information maintaining module 1902 may correspond at least in some aspects to, for example, a storage component as discussed herein. A pilot signal receiving module 1904 may correspond at least in some aspects to, for example, a receiver as discussed herein. A pilot signal searching module 1906 may correspond at least in some aspects to, for example, a receiver as discussed herein. A pilot PN spreading code and/or PN offset determining module 1908 may correspond at least in some aspects to, for example, a pilot processor as discussed herein. A search triggering module 1910 may correspond at least in some aspects to, for example, a pilot processor as discussed herein. A pilot signal determining module 1912 may correspond at least in some aspects to, for example, a pilot processor as discussed herein. A pilot measurement report sending module 1914 may correspond at least in some aspects to, for example, a pilot processor as discussed herein.

The functionality of the modules of FIGS. 17-19 may be implemented in various ways consistent with the teachings herein. In some aspects the functionality of these modules may be implemented as one or more electrical components. In some aspects the functionality of these blocks may be implemented as a processing system including one or more processor components. In some aspects the functionality of these modules may be implemented using, for example, at least a portion of one or more integrated circuits (e.g., an ASIC). As discussed herein, an integrated circuit may include a processor, software, other related components, or some combination thereof. The functionality of these modules also may be implemented in some other manner as taught herein. In some aspects one or more of any dashed blocks in FIGS. 17-19 are optional.

It should be understood that any reference to an element herein using a designation such as "first," "second," and so forth does not generally limit the quantity or order of those elements. Rather, these designations may be used herein as a convenient method of distinguishing between two or more elements or instances of an element. Thus, a reference to first and second elements does not mean that only two elements may be employed there or that the first element must precede the second element in some manner. Also, unless stated otherwise a set of elements may comprise one or more elements. In addition, terminology of the form "at least one of: A, B, or C" used in the description or the claims means "A or B or C or any combination of these elements."

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that any of the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented within or performed by an integrated circuit (IC), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media. It should be appreciated that a computer-readable medium may be implemented in any suitable computer-program product.

The previous description of the disclosed aspects is provided to enable any person skilled in the art to make or use the present disclosure. Various modifications to these aspects will be readily apparent to those skilled in the art, and the generic principles defined herein may be applied to other aspects without departing from the scope of the disclosure. Thus, the present disclosure is not intended to be limited to the aspects shown herein but is to be accorded the widest scope consistent with the principles and novel features disclosed herein.
In the following, further examples are described to facilitate the understanding of the invention:
1. A method of communication, comprising:
   receiving pilot measurement information that identifies pilot PN spreading code information corresponding to pilot signals transmitted on a plurality of frequencies and received by an access terminal; and
   identifying an access point that transmitted the pilot signals based on the identified pilot PN spreading code information and plurality of frequencies.
2. The method of 1, wherein the pilot PN spreading code information comprises at least one pilot PN spreading code or at least one PN offset.
3. The method of 1, wherein the pilot PN spreading code information indicates that the pilot signals were transmitted on the plurality of frequencies using a single pilot PN spreading code and/or a single PN offset.
4. The method of 1, wherein the pilot PN spreading code information indicates that the pilot signals were transmitted on the plurality of frequencies using a plurality of pilot PN spreading codes and/or a plurality of PN offsets.
5. The method of 1, wherein the pilot PN spreading code information indicates that a portion of the pilot signals were transmitted on one of the plurality of frequencies using a plurality of pilot PN spreading codes and/or a plurality of PN offsets.
6. The method of 1, further comprising maintaining information that associates the access point with the pilot PN spreading code information and the plurality of frequencies, wherein the identification of the access point is based on the maintained information.
7. The method of 1, wherein the plurality of frequencies comprise a service frequency used by the access point and at least one beacon frequency used by the access point.
8. The method of claim 1, wherein the identification of the access point is further based on pilot strength information associated with the pilot signals.
9. The method of 1, further comprising initiating handover of the access terminal to the access point as a result of the identification of the access point.
10. The method of 1, wherein the identification of the access point comprises:
   identifying the access point as a candidate that potentially sent the pilot signals based on the identified pilot PN spreading code information and plurality of frequencies;
   identifying at least one other access point as at least one other candidate that potentially sent the pilot signals based on the identified pilot PN spreading code information and plurality of frequencies;
   sending messages to the access point and the at least one other access point as a result of the identifications of the access points as candidates, wherein the messages request the access points to monitor for signals from the access terminal;
   receiving at least one response to the messages, wherein the at least one response indicates whether at least one of the access points received signals from the access terminal; and
   identifying the access point as a handover target based on the at least one response.
11. The method of 1, wherein the identification of the access point is performed by another access point that receives the pilot measurement information from the access terminal via a pilot measurement report.
12. The method of 1, wherein the identification of the access point is performed at a network entity that receives the pilot measurement information from another access point that receives the pilot measurement information from the access terminal.
13. The method of 1, wherein the access point comprises a femto access point.
14. An apparatus for communication, comprising:
   a receiver configured to receive pilot measurement information that identifies pilot PN spreading code information corresponding to pilot signals transmitted on a plurality of frequencies and received by an access terminal; and
   a pilot processor configured to identify an access point that transmitted the pilot signals based on the identified pilot PN spreading code information and plurality of frequencies.
15. The apparatus of 14, wherein the pilot PN spreading code information comprises at least one pilot PN spreading code or at least one PN offset.
16. The apparatus of 14, further comprising a storage component configured to maintain information that associates the access point with the pilot PN spreading code information and the plurality of frequencies, wherein the identification of the access point is based on the maintained information.
17. The apparatus of 14, wherein the plurality of frequencies comprise a service frequency used by the access point and at least one beacon frequency used by the access point.
18. The apparatus of 14, wherein the identification of the access point is further based on pilot strength information associated with the pilot signals.
19. An apparatus for communication, comprising:
   means for receiving pilot measurement information that identifies pilot PN spreading code information corresponding to pilot signals transmitted on a plurality of frequencies and received by an access terminal; and
   means for identifying an access point that transmitted the pilot signals based on the identified pilot PN spreading code information and plurality of frequencies.
20. The apparatus of 19, wherein the pilot PN spreading code information comprises at least one pilot PN spreading code or at least one PN offset.
21. The apparatus of 19, further comprising means for maintaining information that associates the access point with the pilot PN spreading code information and the plurality of frequencies, wherein the identification of the access point is based on the maintained information.
22. The apparatus of 19, wherein the plurality of frequencies comprise a service frequency used by the access point and at least one beacon frequency used by the access point.
23. The apparatus of 19, wherein the identification of the access point is further based on pilot strength information associated with the pilot signals.
24. A computer-program product, comprising:
   computer-readable medium comprising code for causing a computer to:
      receive pilot measurement information that identifies pilot PN spreading code information corresponding to pilot signals transmitted on a plurality of frequencies and received by an access terminal; and
      identify an access point that transmitted the pilot signals based on the identified pilot PN spreading code information and plurality of frequencies.
25. The computer-program product of 24, wherein the pilot PN spreading code information comprises at least one pilot PN spreading code or at least one PN offset.
26. The computer-program product of 24, wherein:
   the computer-readable medium further comprises code for causing the computer to maintain information that associates the access point with the pilot PN spreading code information and the plurality of frequencies; and
   the identification of the access point is based on the maintained information.
27. The computer-program product of 24, wherein the plurality of frequencies comprise a service frequency used by the access point and at least one beacon frequency used by the access point.
28. The computer-program product of 24, wherein the identification of the access point is further based on pilot strength information associated with the pilot signals.
29. A method of communication, comprising:
   receiving pilot measurement information that indicates that an access terminal received a pilot signal on a first frequency; and
   sending a message as a result of the receipt of the pilot measurement information, wherein the message requests the access terminal to conduct a pilot signal search on at least one other frequency.
30. The method of 29, wherein the message specifies the at least one other frequency on which the access terminal is to conduct the pilot signal search.
31. The method of 30, wherein:
   the pilot measurement information identifies a pilot PN spreading code and/or a PN offset used to transmit the pilot signal on the first frequency; and
   the method further comprises selecting the at least one other frequency that is specified by the message based on the identified pilot PN spreading code and/or PN offset.
32. The method of 29, wherein the message comprises an indication of at least one pilot PN spreading code and/or at least one PN offset used on the at least one other frequency.
33. The method of 32, wherein:
   the pilot measurement information identifies a pilot PN spreading code and/or a PN offset used to transmit the pilot signal on the first frequency; and
   the method further comprises determining the at least one pilot PN spreading code and/or at least one PN offset used on the at least one other frequency based on the identified pilot PN spreading code and/or PN offset.
34. The method of 29, further comprising:
   receiving additional pilot measurement information as a result of sending the message, wherein the additional pilot information identifies at least one pilot PN spreading code and/or at least one PN offset associated with at least one other pilot signal received by the access terminal on the at least one other frequency; and
   identifying an access point that transmitted the pilot signal and the at least one other pilot signal based on the additional pilot measurement information.
35. The method of 34, wherein the access point comprises a femto access point.
36. The method of 34, further comprising initiating handover of the access terminal to the access point as a result of the identification of the access point.
37. The method of 29, wherein the message is sent by an access point that receives the pilot measurement information from the access terminal via a pilot measurement report.
38. The method of 29, wherein:
   the pilot measurement information is received by a network entity from an access point that received the pilot measurement information from the access terminal;
   the message is sent by the network entity to the access point; and
   the access point sends a request to the access terminal to conduct the pilot search as a result of receiving the message from the network entity.
39. An apparatus for communication, comprising:
   a receiver configured to receive pilot measurement information that indicates that an access terminal received a pilot signal on a first frequency; and
   a pilot processor configured to send a message as a result of the receipt of the pilot measurement information, wherein the message requests the access terminal to conduct a pilot signal search on at least one other frequency.
40. The apparatus of 39, wherein the message specifies the at least one other frequency on which the access terminal is to conduct the pilot signal search.
41. The apparatus of 40, wherein:
   the pilot measurement information identifies a pilot PN spreading code and/or a PN offset used to transmit the pilot signal on the first frequency; and
   the pilot processor is further configured to select the at least one other frequency that is specified by the message based on the identified pilot PN spreading code and/or PN offset.
42. The apparatus of 39, wherein the message comprises an indication of at least one pilot PN spreading code and/or at least one PN offset used on the at least one other frequency.
43. The apparatus of 42, wherein:
   the pilot measurement information identifies a pilot PN spreading code and/or a PN offset used to transmit the pilot signal on the first frequency; and
   the pilot processor is further configured to determine the at least one pilot PN spreading code and/or at least one PN offset used on the at least one other frequency based on the identified pilot PN spreading code and/or PN offset.
44. An apparatus for communication, comprising:
   means for receiving pilot measurement information that indicates that an access terminal received a pilot signal on a first frequency; and
   means for sending a message as a result of the receipt of the pilot measurement information, wherein the message requests the access terminal to conduct a pilot signal search on at least one other frequency.
45. The apparatus of 44, wherein the message specifies the at least one other frequency on which the access terminal is to conduct the pilot signal search.
46. The apparatus of 45, wherein:
   the pilot measurement information identifies a pilot PN spreading code and/or a PN offset used to transmit the pilot signal on the first frequency; and
   the apparatus further comprises means for selecting the at least one other frequency that is specified by the message based on the identified pilot PN spreading code and/or PN offset.
47. The apparatus of 44, wherein the message comprises an indication of at least one pilot PN spreading code and/or at least one PN offset used on the at least one other frequency.
48. The apparatus of 47, wherein:
   the pilot measurement information identifies a pilot PN spreading code and/or a PN offset used to transmit the pilot signal on the first frequency; and
   the apparatus further comprises means for determining the at least one pilot PN spreading code and/or at least one PN offset used on the at least one other frequency based on the identified pilot PN spreading code and/or PN offset.
49. A computer-program product, comprising:
   computer-readable medium comprising code for causing a computer to:
      receive pilot measurement information that indicates that an access terminal received a pilot signal on a first frequency; and
      send a message as a result of the receipt of the pilot measurement information, wherein the message requests the access terminal to conduct a pilot signal search on at least one other frequency.
50. The computer-program product of 49, wherein the message specifies the at least one other frequency on which the access terminal is to conduct the pilot signal search.
51. The computer-program product of 50, wherein:
   the pilot measurement information identifies a pilot PN spreading code and/or a PN offset used to transmit the pilot signal on the first frequency; and
   the computer-readable medium further comprises code for causing the computer to select the at least one other frequency that is specified by the message based on the identified pilot PN spreading code and/or PN offset.
52. The computer-program product of 49, wherein the message comprises an indication of at least one pilot PN spreading code and/or at least one PN offset used on the at least one other frequency.
53. The computer-program product of 52, wherein:
   the pilot measurement information identifies a pilot PN spreading code and/or a PN offset used to transmit the pilot signal on the first frequency; and
   the computer-readable medium further comprises code for causing the computer to determine the at least one pilot PN spreading code and/or at least one PN offset used on the at least one other frequency based on the identified pilot PN spreading code and/or PN offset.
54. A method of communication, comprising:
   maintaining information that associates at least one access point with pilot PN spreading code information used by the at least one access point to transmit pilot signals on a plurality of frequencies;
   receiving a first pilot signal on one of the frequencies; and
   searching for at least one other pilot signal on at least another one of the frequencies as a result of the receipt of the first pilot signal.
55. The method of 54, further comprising:
   determining whether the first pilot signal comprises an indication of at least one pilot PN spreading code and/or at least one PN offset listed in the pilot PN spreading code information; and
   triggering the search for the at least one other pilot signal based on the determination.
56. The method of 54, further comprising:
   determining whether the first pilot signal is associated with a femto access point;
      and
   triggering the search for the at least one other pilot signal based on the determination.
57. The method of 54, further comprising:
   receiving the at least one other pilot signal as a result of the search; and
   sending at least one pilot measurement report based on the receptions of the first pilot signal and the at least one other pilot signal.
58. The method of 54, wherein the pilot PN spreading code information comprises at least one PN offset or at least one pilot PN spreading code.
59. The method of 54, wherein, for each access point of the at least one access point, the maintained information associates the access point with a service frequency used by the access point and at least one beacon frequency used by the access point.
60. The method of 54, wherein, for each access point of the at least one access point, the maintained information associates the access point with at least one pilot PN spreading code and/or at least one PN offset, and the information further associates the access point with two or more of the frequencies on which the at least one pilot PN spreading code and/or the at least one PN offset is used.
61. The method of 54, wherein the at least one access point comprises at least one femto access point.
62. An apparatus for communication, comprising:
   a storage component configured to maintain information that associates at least one access point with pilot PN spreading code information used by the at least one access point to transmit pilot signals on a plurality of frequencies; and
   a receiver configured to receive a first pilot signal on one of the frequencies, and further configured to search for at least one other pilot signal on at least another one of the frequencies as a result of the receipt of the first pilot signal.
63. The apparatus of 62, further comprising a pilot processor configured to:
   determine whether the first pilot signal comprises an indication of at least one pilot PN spreading code and/or at least one PN offset listed in the pilot PN spreading code information; and
   trigger the search for the at least one other pilot signal based on the determination.
64. The apparatus of 62, further comprising a pilot processor configured to:
   determine whether the first pilot signal is associated with a femto access point;
      and
   trigger the search for the at least one other pilot signal based on the determination.
65. The apparatus of 62, wherein the pilot PN spreading code information comprises at least one PN offset or at least one pilot PN spreading code.
66. An apparatus for communication, comprising:
   means for maintaining information that associates at least one access point with pilot PN spreading code information used by the at least one access point to transmit pilot signals on a plurality of frequencies;
   means for receiving a first pilot signal on one of the frequencies; and
   means for searching for at least one other pilot signal on at least another one of the frequencies as a result of the receipt of the first pilot signal.
67. The apparatus of 66, further comprising:
   means for determining whether the first pilot signal comprises an indication of at least one pilot PN spreading code and/or at least one PN offset listed in the pilot PN spreading code information; and
   means for triggering the search for the at least one other pilot signal based on the determination.
68. The apparatus of 66, further comprising:
   means for determining whether the first pilot signal is associated with a femto access point; and
   means for triggering the search for the at least one other pilot signal based on the determination.
69. The apparatus of 66, wherein the pilot PN spreading code information comprises at least one PN offset or at least one pilot PN spreading code.
70. A computer-program product, comprising:
   computer-readable medium comprising code for causing a computer to:
      maintain information that associates at least one access point with pilot PN spreading code information used by the at least one access point to transmit pilot signals on a plurality of frequencies;
      receive a first pilot signal on one of the frequencies; and
      search for at least one other pilot signal on at least another one of the frequencies as a result of the receipt of the first pilot signal.
71. The computer-program product of 70, wherein the computer-readable medium further comprises code for causing the computer to:
   determine whether the first pilot signal comprises an indication of at least one pilot PN spreading code and/or at least one PN offset listed in the pilot PN spreading code information; and
   trigger the search for the at least one other pilot signal based on the determination.
72. The computer-program product of 70, wherein the computer-readable medium further comprises code for causing the computer to:
   determine whether the first pilot signal is associated with a femto access point;
      and
   trigger the search for the at least one other pilot signal based on the determination.
73. The computer-program product of 70, wherein the pilot PN spreading code information comprises at least one PN offset and/or at least one pilot PN spreading code.

## Claims

1. A method of communication, comprising:
receiving (406) pilot measurement information that indicates that an access terminal (102, 1306, 1420) received a pilot signal on a first frequency; and
sending (412) a message as a result of the receipt of the pilot measurement information, wherein the message requests the access terminal (102, 1306, 1420) to conduct a pilot signal search on at least one other frequency.

2. The method of claim 1, wherein the message specifies the at least one other frequency on which the access terminal (102, 1306, 1420) is to conduct the pilot signal search.

3. The method of claim 2, wherein:
the pilot measurement information identifies a pilot PN spreading code and/or a PN offset used to transmit the pilot signal on the first frequency; and
the method further comprises selecting the at least one other frequency that is specified by the message based on the identified pilot PN spreading code and/or PN offset.

4. The method of claim 1, wherein the message comprises an indication of at least one pilot PN spreading code and/or at least one PN offset used on the at least one other frequency.

5. The method of claim 4, wherein:
the pilot measurement information identifies a pilot PN spreading code and/or a PN offset used to transmit the pilot signal on the first frequency; and
the method further comprises determining the at least one pilot PN spreading code and/or at least one PN offset used on the at least one other frequency based on the identified pilot PN spreading code and/or PN offset.

6. The method of claim 1, further comprising:
receiving (416) additional pilot measurement information as a result of sending the message, wherein the additional pilot information identifies at least one pilot PN spreading code and/or at least one PN offset associated with at least one other pilot signal received by the access terminal (102, 306, 1420) on the at least one other frequency;
and
identifying (418) an access point (104, 106, 108) that transmitted the pilot signal and the at least one other pilot signal based on the additional pilot measurement information.

7. The method of claim 1, wherein the message is sent by an access point (104, 106, 108) that receives the pilot measurement information from the access terminal (102, 1306, 1420) via a pilot measurement report.

8. The method of claim 1, wherein:
the pilot measurement information is received by a network entity from an access point (104, 106, 108) that received the pilot measurement information from the access terminal (102, 1306, 1420);
the message is sent by the network entity to the access point (104, 106, 108); and
the access point (104, 106, 108) sends a request to the access terminal (102, 1306, 1420) to conduct the pilot search as a result of receiving the message from the network entity.

9. A computer-program comprising instructions for performing a method according to any of the claims 1 to 8.

10. An apparatus (1800) for communication, comprising:
means (1802) for receiving pilot measurement information that indicates that an access terminal (102, 1306, 1420) received a pilot signal on a first frequency; and
means (1804) for sending a message as a result of the receipt of the pilot measurement information, wherein the message requests the access terminal (102, 1306, 1420) to conduct a pilot signal search on at least one other frequency.

11. The apparatus of claim 10, wherein the message specifies the at least one other frequency on which the access terminal (102, 1306, 1420) is to conduct the pilot signal search.

12. The apparatus of claim 11, wherein:
the pilot measurement information identifies a pilot PN spreading code and/or a PN offset used to transmit the pilot signal on the first frequency; and
the apparatus further comprises means (1806) for selecting the at least one other frequency that is specified by the message based on the identified pilot PN spreading code and/or PN offset.

13. The apparatus of claim 10, wherein the message comprises an indication of at least one pilot PN spreading code and/or at least one PN offset used on the at least one other frequency.

14. The apparatus of claim 13, wherein:
the pilot measurement information identifies a pilot PN spreading code and/or a PN offset used to transmit the pilot signal on the first frequency; and
the apparatus further comprises means for determining the at least one pilot PN spreading code and/or at least one PN offset used on the at least one other frequency based on the identified pilot PN spreading code and/or PN offset.

15. The apparatus according to claims 10 to 14 wherein the means for receiving are implemented as a receiver and the means for sending are implemented as a pilot processor.
